# EUROPEAN PATENT APPLICATION

(11) **EP 3 726 453 A1**
(43) Date of publication of application: **21.10.2020**
(21) Application number: 18887400.2
(22) Date of filing: 18.09.2018
(51) Int. Cl.: G06Q 50/10

(54) **INFORMATION PROCESSING DEVICE, INFORMATION PROCESSING METHOD, AND PROGRAM**

(30) Priority: 13.12.2017 JP 2017238529
(71) Applicant: Sony Corporation, 108-0075 Tokyo (JP)
(72) Inventor: KOBAYASHI, Yoshiyuki, Tokyo 108-0075 (JP); SUGAYA, Shigeru, Tokyo 108-0075 (JP); UKITA, Masakazu, Tokyo 108-0075 (JP); SATO, Naoyuki, Tokyo 108-0075 (JP); WAKITA, Yoshihiro, Tokyo 108-0075 (JP); TSUJII, Takahiro, Tokyo 108-0075 (JP)
(74) Representative: MFG Patentanwälte Meyer-Wildhagen Meggle-Freund Gerhard PartG mbB
(86) International application number: PCT/JP2018/034375
(87) International publication number: WO 2019/116658

(57) **Abstract**

Provided is an information processing apparatus, information processing method, and program, capable of estimating the reliability of an evaluator to improve the accuracy of an evaluation value.

There is provided an information processing apparatus including a control unit configured to perform processing of acquiring evaluation information for an evaluation target person by an evaluator and sensing data of the evaluation target person, and processing of estimating reliability of evaluation by the evaluator on the basis of the evaluation information for the evaluation target person by the evaluator and the sensing data of the evaluation target person.

## Description

### TECHNICAL FIELD

The present disclosure relates to an information processing apparatus, an information processing method, and a program.

### BACKGROUND ART

In the past, the evaluation of oneself viewed by others has been an important material for objectively grasping oneself up to now. In addition, the objective evaluation of each person from others has also become an important factor in evaluating personnel at work or assigning jobs and in judging persons connected by a social networking service (SNS) or an opponent upon conducting a business transaction on the Internet.

Regarding the evaluation of an entity such as persons or stores, in one example, Patent Document 1 below discloses a technique of generating a ranking of an entity using a calculated score of reputation or influence.

### CITATION LIST

### PATENT DOCUMENT

Patent Document 1: Japanese Patent Application Laid-Open No. 2015-57718

### SUMMARY OF THE INVENTION

### PROBLEMS TO BE SOLVED BY THE INVENTION

However, the evaluators have individual differences in their evaluation ability, and the use of all evaluations as they are, makes it difficult to obtain an accurate evaluation value in some cases.

Thus, the present disclosure intends to provide an information processing apparatus, information processing method, and program, capable of estimating the reliability of an evaluator to improve the accuracy of an evaluation value.

### SOLUTIONS TO PROBLEMS

According to the present disclosure, there is provided an information processing apparatus including a control unit configured to perform processing of acquiring evaluation information for an evaluation target person by an evaluator and sensing data of the evaluation target person, and processing of estimating reliability of evaluation by the evaluator on the basis of the evaluation information for the evaluation target person by the evaluator and the sensing data of the evaluation target person.

According to the present disclosure, there is provided an information processing method, by a processor, including acquiring evaluation information for an evaluation target person by an evaluator and sensing data of the evaluation target person, and estimating reliability of evaluation by the evaluator on the basis of the evaluation information for the evaluation target person by the evaluator and the sensing data of the evaluation target person.

According to the present disclosure, there is provided a program for causing a computer to function as: a control unit configured to perform processing of acquiring evaluation information for an evaluation target person by an evaluator and sensing data of the evaluation target person, and processing of estimating reliability of evaluation by the evaluator on the basis of the evaluation information for the evaluation target person by the evaluator and the sensing data of the evaluation target person.

### EFFECTS OF THE INVENTION

According to the present disclosure as described above, it is possible to estimate the reliability of the evaluator to improve the accuracy of the evaluation value.

Note that the effects described above are not necessarily limitative. With or in the place of the above effects, there may be achieved any one of the effects described in this specification or other effects that may be grasped from this specification.

### BRIEF DESCRIPTION OF DRAWINGS

Fig. 1 is a block diagram illustrating an example of an overall configuration of an embodiment of the present disclosure.
Fig. 2 is a block diagram illustrating another example of the overall configuration of an embodiment of the present disclosure.
Fig. 3 is a block diagram illustrating another example of the overall configuration of an embodiment of the present disclosure.
Fig. 4 is a block diagram illustrating another example of the overall configuration of an embodiment of the present disclosure.
Fig. 5 is a block diagram illustrating a functional configuration example of a processing unit according to an embodiment of the present disclosure.
Fig. 6 is a diagram illustrating an example of an evaluation input screen according to an embodiment of the present disclosure.
Fig. 7 is a diagram illustrated to describe an example of acquisition of evaluation information from sensing data of an evaluator according to an embodiment of the present disclosure.
Fig. 8 is a diagram illustrated to describe an example of calculation of an evaluation value based on evaluation propagation according to an embodiment of the present disclosure.
Fig. 9 is a diagram illustrating an example of a display screen of an analysis result according to an embodiment of the present disclosure.
Fig. 10 is a flowchart illustrating an overall processing procedure of an information processing system according to an embodiment of the present disclosure.
Fig. 11 is a flowchart illustrating an example of processing of acquiring evaluation information from sensing data of an evaluator in an embodiment of the present disclosure.
Fig. 12 is a flowchart illustrating an example of processing of acquiring evaluation information from sensing data of an evaluation target person in an embodiment of the present disclosure.
Fig. 13 is a flowchart illustrating an example of first analysis processing of calculating an evaluation value on the basis of evaluation propagation between users in an embodiment of the present disclosure.
Fig. 14 is a flowchart illustrating an example of second analysis processing of calculating an evaluation value with reference to the reliability of an evaluator and updating the reliability in an embodiment of the present disclosure.
Fig. 15 is a flowchart illustrating an example of processing of estimating the reliability of an evaluator on the basis of sensing data of an evaluation target person in an embodiment of the present disclosure.
Fig. 16 is a flowchart illustrating an example of third analysis processing of calculating an evaluation value on the basis of relative evaluation in an embodiment of the present disclosure.
Fig. 17 is a flowchart illustrating an example of processing of integrating evaluation values that are analyzed in an embodiment of the present disclosure.
Fig. 18 is a block diagram illustrating a functional configuration example of a processing unit that performs evaluation learning and automatic evaluation according to an application example of the present embodiment.
Fig. 19 is a diagram illustrated to describe a specific example of automatic evaluation according to an application example of the present embodiment.
Fig. 20 is a block diagram illustrating a functional configuration example of a processing unit that performs causal analysis according to an application example of the present embodiment.

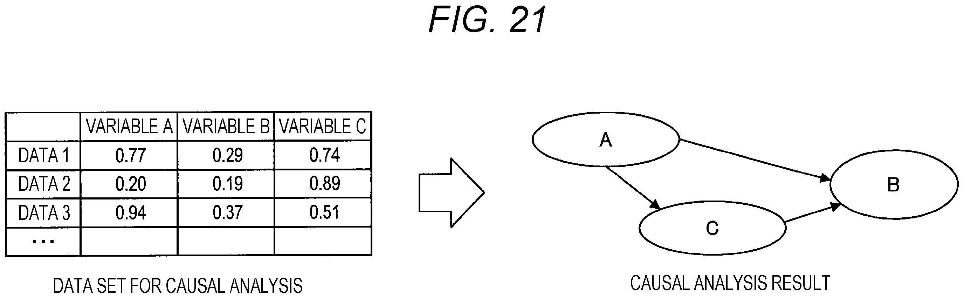

Fig. 21 is a diagram illustrated to describe a causal analysis technique used in an application example of the present embodiment.
Fig. 22 is a flowchart illustrating the procedure of causal analysis processing in an application example of the present embodiment.
Fig. 23 is a flowchart illustrating the procedure of discretization processing of continuous value variables with respect to data used for causal analysis according to an application example of the present embodiment.
Fig. 24 is a diagram illustrating an example of causal analysis between sensing data and evaluation information according to an application example of the present embodiment.
Fig. 25 is a flowchart illustrating the procedure of processing of presenting a causal analysis result in an application example of the present embodiment.
Fig. 26 is a diagram illustrating an example of a display screen of an analysis result according to an application example of the present embodiment.
Fig. 27 is a block diagram illustrating a functional configuration example of a processing unit that performs time-series causal analysis of evaluation in an application example of the present embodiment.
Fig. 28 is a diagram illustrating an example of a display screen showing a result of an evaluation time-series analysis according to an application example of the present embodiment.
Fig. 29 is a block diagram illustrating a functional configuration example of a processing unit that performs automatic reliability estimation according to an application example of the present embodiment.
Fig. 30 is a block diagram illustrating a first example of a system configuration according to an embodiment of the present disclosure.
Fig. 31 is a block diagram illustrating a second example of a system configuration according to an embodiment of the present disclosure.
Fig. 32 is a block diagram illustrating a third example of a system configuration according to an embodiment of the present disclosure.
Fig. 33 is a block diagram illustrating a fourth example of a system configuration according to an embodiment of the present disclosure.
Fig. 34 is a block diagram illustrating a fifth example of a system configuration according to an embodiment of the present disclosure.
Fig. 35 is a diagram illustrating a client-server system as one of the more specific examples of a system configuration according to an embodiment of the present disclosure.
Fig. 36 is a diagram illustrating a distributed system as one of the other specific examples of a system configuration according to an embodiment of the present disclosure.
Fig. 37 is a block diagram illustrating a sixth example of a system configuration according to an embodiment of the present disclosure.
Fig. 38 is a block diagram illustrating a seventh example of a system configuration according to an embodiment of the present disclosure.
Fig. 39 is a block diagram illustrating an eighth example of a system configuration according to an embodiment of the present disclosure.
Fig. 40 is a block diagram illustrating a ninth example of a system configuration according to an embodiment of the present disclosure.
Fig. 41 is a diagram illustrating an example of a system including an intermediate server as one of the more specific examples of a system configuration according to an embodiment of the present disclosure.
Fig. 42 is a diagram illustrating an example of a system including a terminal device functioning as a host, as one of the more specific examples of a system configuration according to an embodiment of the present disclosure.
Fig. 43 is a diagram illustrating an example of a system including an edge server as one of the more specific examples of a system configuration according to an embodiment of the present disclosure.
Fig. 44 is a diagram illustrating an example of a system including fog computing as one of the more specific examples of a system configuration according to an embodiment of the present disclosure.
Fig. 45 is a block diagram illustrating a tenth example of a system configuration according to an embodiment of the present disclosure.
Fig. 46 is a block diagram illustrating an eleventh example of a system configuration according to an embodiment of the present disclosure.
Fig. 47 is a block diagram illustrating a hardware configuration example of an information processing apparatus according to an embodiment of the present disclosure.

### MODE FOR CARRYING OUT THE INVENTION

Hereinafter, a preferred embodiment of the present disclosure will be described in detail with reference to the appended drawings. Note that, in this specification and the appended drawings, components that have substantially the same function and configuration are denoted with the same reference numerals, and repeated explanation of these structural elements is omitted.

Moreover, the description will be made in the following order.
1. Overall configuration
   1-1. Input unit
   1-2. Processing unit
   1-3. Output unit
2. Functional configuration of processing unit
   2-1. Overall functional configuration
3. Processing procedure
   3-1. Overall processing procedure
   3-2. Acquisition of evaluation information
   3-3. Analysis of evaluation information
      (3-3-1. First analysis processing)
      (3-3-2. Second analysis processing)
      (3-3-3. Third analysis processing)
      (3-3-4. Integration processing of evaluation values (analysis results))
4. Application examples
   4-1. Automatic evaluation
   4-2. Causal analysis
   4-3. Time-series analysis
   4-4. Automatic estimation of reliability
5. System configuration
6. Hardware configuration
7. Supplement

### (1. Overall configuration)

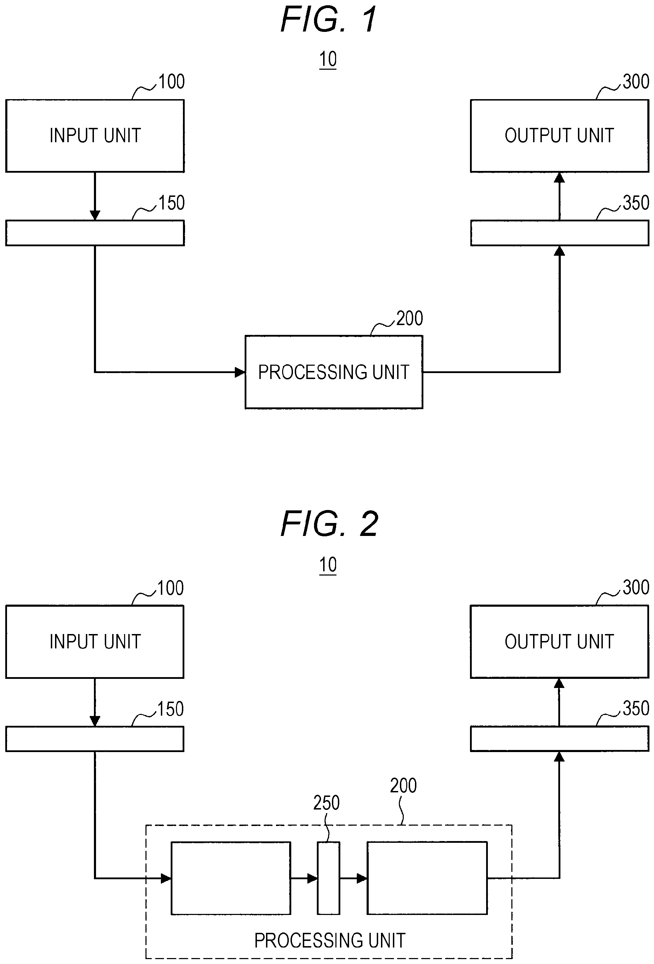

Fig. 1 is a block diagram illustrating an example of the overall configuration of an embodiment of the present disclosure. Referring to Fig. 1, a system 10 includes an input unit 100, a processing unit 200, and an output unit 300. The input unit 100, the processing unit 200, and the output unit 300 are implemented as one or a plurality of information processing apparatuses as shown in a configuration example of the system 10 described later.

### (1-1. Input unit)

The input unit 100 includes, in one example, an operation input apparatus, a sensor, software used to acquire information from an external service, or the like, and it receives input of various types of information from a user, surrounding environment, or other services.

The operation input apparatus includes, in one example, a hardware button, a keyboard, a mouse, a touchscreen panel, a touch sensor, a proximity sensor, an acceleration sensor, an angular velocity sensor, a temperature sensor, or the like, and it receives an operation input by a user. In addition, the operation input apparatus can include a camera (image sensor), a microphone, or the like that receives an operation input performed by the user's gesture or voice.

Moreover, the input unit 100 can include a processor or a processing circuit that converts a signal or data acquired by the operation input apparatus into an operation command. Alternatively, the input unit 100 can output a signal or data acquired by the operation input apparatus to an interface 150 without converting it into an operation command. In this case, the signal or data acquired by the operation input apparatus is converted into the operation command, in one example, in the processing unit 200.

The sensors include an acceleration sensor, an angular velocity sensor, a geomagnetic sensor, an illuminance sensor, a temperature sensor, a barometric sensor, or the like and detects acceleration, an angular velocity, a geographic direction, an illuminance, a temperature, an atmospheric pressure, or the like applied to or associated with the device. These various sensors can detect a variety of types of information as information regarding the user, for example, as information representing the user's movement, orientation, or the like in the case where the user carries or wears the device including the sensors, for example. Further, the sensors may also include sensors that detect biological information of the user such as a pulse, a sweat, a brain wave, a tactile sense, an olfactory sense, or a taste sense. The input unit 100 may include a processing circuit that acquires information representing the user's emotion by analyzing data of an image or sound detected by a camera or a microphone described later and/or information detected by such sensors. Alternatively, the information and/or data mentioned above can be output to the interface 150 without being subjected to the execution of analysis and it can be subjected to the execution of analysis, in one example, in the processing unit 200.

Further, the sensors may acquire, as data, an image or sound around the user or device by a camera, a microphone, the various sensors described above, or the like. In addition, the sensors may also include a position detection means that detects an indoor or outdoor position. Specifically, the position detection means may include a global navigation satellite system (GNSS) receiver, for example, a global positioning system (GPS) receiver, a global navigation satellite system (GLONASS) receiver, a BeiDou navigation satellite system (BDS) receiver and/or a communication device, or the like. The communication device performs position detection using a technology such as, for example, Wi-fi (registered trademark), multi-input multi-output (MIMO), cellular communication (for example, position detection using a mobile base station or a femto cell), or local wireless communication (for example, Bluetooth low energy (BLE) or Bluetooth (registered trademark)), a low power wide area (LPWA), or the like.

In the case where the sensors described above detect the user's position or situation (including biological information), the device including the sensors is, for example, carried or worn by the user. Alternatively, in the case where the device including the sensors is installed in a living environment of the user, it may also be possible to detect the user's position or situation (including biological information). For example, it is possible to detect the user's pulse by analyzing an image including the user's face acquired by a camera fixedly installed in an indoor space or the like.

Moreover, the input unit 100 can include a processor or a processing circuit that converts the signal or data acquired by the sensor into a predetermined format (e.g., converts an analog signal into a digital signal, encodes an image or audio data). Alternatively, the input unit 100 can output the acquired signal or data to the interface 150 without converting it into a predetermined format. In this case, the signal or data acquired by the sensor is converted into an operation command in the processing unit 200.

The software used to acquire information from an external service acquires various types of information provided by the external service by using, in one example, an application program interface (API) of the external service. The software can acquire information from, in one example, a server of an external service, or can acquire information from application software of a service being executed on a client device. The software allows, in one example, information such as text or an image posted by the user or other users to an external service such as social media to be acquired. The information to be acquired may not necessarily be posted intentionally by the user or other users and can be, in one example, the log or the like of operations executed by the user or other users. In addition, the information to be acquired is not limited to personal information of the user or other users and can be, in one example, information delivered to an unspecified number of users, such as news, weather forecast, traffic information, a point of interest (POI), or advertisement.

Further, the information to be acquired from an external service can include information generated by detecting the information acquired by the various sensors described above, for example, acceleration, angular velocity, azimuth, altitude, illuminance, temperature, barometric pressure, pulse, sweating, brain waves, tactile sensation, olfactory sensation, taste sensation, other biometric information, emotion, position information, or the like by a sensor included in another system that cooperates with the external service and by posting the detected information to the external service.

The interface 150 is an interface between the input unit 100 and the processing unit 200. In one example, in a case where the input unit 100 and the processing unit 200 are implemented as separate devices, the interface 150 can include a wired or wireless communication interface. In addition, the Internet can be interposed between the input unit 100 and the processing unit 200. More specifically, examples of the wired or wireless communication interface can include cellular communication such as 3G/LTE/5G, wireless local area network (LAN) communication such as Wi-Fi (registered trademark), wireless personal area network (PAN) communication such as Bluetooth (registered trademark), near field communication (NFC), Ethernet (registered trademark), high-definition multimedia interface (HDMI) (registered trademark), universal serial bus (USB), and the like. In addition, in a case where the input unit 100 and at least a part of the processing unit 200 are implemented in the same device, the interface 150 can include a bus in the device, data reference in a program module, and the like (hereinafter, also referred to as an in-device interface). In addition, in a case where the input unit 100 is implemented in a distributed manner to a plurality of devices, the interface 150 can include different types of interfaces for each device. In one example, the interface 150 can include both a communication interface and the in-device interface.

### (1-2. Processing unit 200)

The processing unit 200 executes various types of processing on the basis of the information obtained by the input unit 100. More specifically, for example, the processing unit 200 includes a processor or a processing circuit such as a central processing unit (CPU), a graphics processing unit (GPU), a digital signal processor (DSP), an application specific integrated circuit (ASIC), or a field-programmable gate array (FPGA). Further, the processing unit 200 may include a memory or a storage device that temporarily or permanently stores a program executed by the processor or the processing circuit, and data read or written during a process.

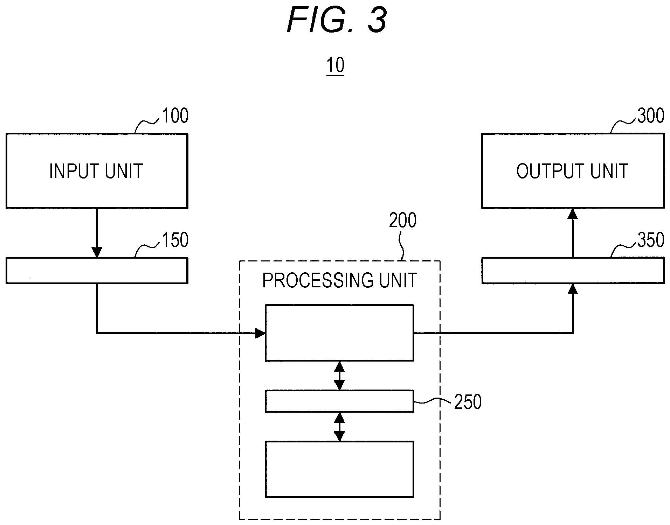

Moreover, the processing unit 200 can be implemented as a single processor or processing circuit in a single device or can be implemented in a distributed manner as a plurality of processors or processing circuits in a plurality of devices or the same device. In a case where the processing unit 200 is implemented in a distributed manner, an interface 250 is interposed between the divided parts of the processing unit 200 as in the examples illustrated in Figs. 2 and 3. The interface 250 can include the communication interface or the in-device interface, which is similar to the interface 150 described above. Moreover, in the description of the processing unit 200 to be given later in detail, individual functional blocks that constitute the processing unit 200 are illustrated, but the interface 250 can be interposed between any functional blocks. In other words, in a case where the processing unit 200 is implemented in a distributed manner as a plurality of devices or a plurality of processors or processing circuits, ways of arranging the functional blocks to respective devices or respective processors or processing circuits are performed by any method unless otherwise specified.

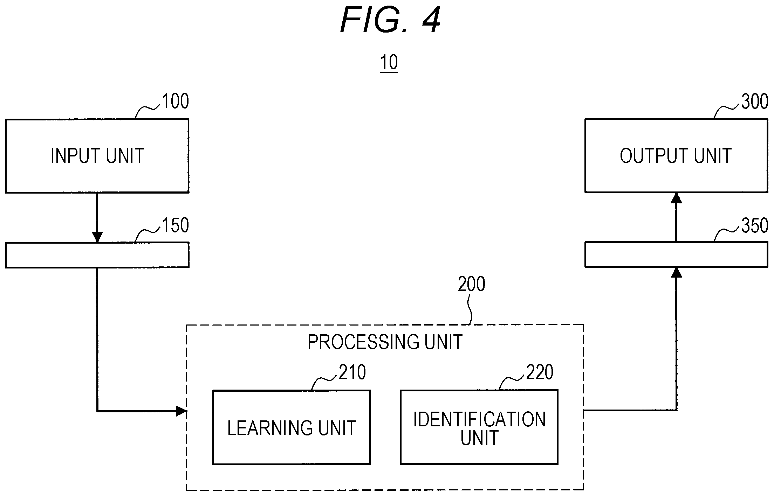

An example of the processing performed by the processing unit 200 configured as described above can include machine learning. Fig. 4 illustrates an example of a functional block diagram of the processing unit 200. As illustrated in Fig. 4, the processing unit 200 includes a learning unit 210 and an identification unit 220. The learning unit 210 performs machine learning on the basis of the input information (learning data) and outputs a learning result. In addition, the identification unit 220 performs identification (such as determination or prediction) on the input information on the basis of the input information and the learning result.

The learning unit 210 employs, in one example, a neural network or deep learning as a learning technique. The neural network is a model that is modeled after a human neural circuit and is constituted by three types of layers, an input layer, a middle layer (hidden layer), and an output layer. In addition, the deep learning is a model using a multi-layer structure neural network and allows a complicated pattern hidden in a large amount of data to be learned by repeating characteristic learning in each layer. The deep learning is used, in one example, to identify an object in an image or a word in a voice.

Further, as a hardware structure that implements such machine learning, neurochip/neuromorphic chip incorporating the concept of the neural network can be used.

Further, the settings of problems in machine learning includes supervised learning, unsupervised learning, semi-supervised learning, reinforcement learning, inverse reinforcement learning, active learning, transfer learning, and the like. In one example, in supervised learning, features are learned on the basis of given learning data with a label (supervisor data). This makes it possible to derive a label for unknown data.

Further, in unsupervised learning, a large amount of unlabeled learning data is analyzed to extract features, and clustering is performed on the basis of the extracted features. This makes it possible to perform tendency analysis or future prediction on the basis of vast amounts of unknown data.

Further, semi-supervised learning is a mixture of supervised learning and unsupervised learning, and it is a technique of performing learning repeatedly while calculating features automatically by causing features to be learned with supervised learning and then by giving a vast amount of training data with unsupervised learning.

Further, reinforcement learning deals with the problem of deciding an action an agent ought to take by observing the current state in a certain environment. The agent learns rewards from the environment by selecting an action and learns a strategy to maximize the reward through a series of actions. In this way, learning of the optimal solution in a certain environment makes it possible to reproduce human judgment and to cause a computer to learn judgment beyond humans.

The machine learning as described above makes it also possible for the processing unit 200 to generate virtual sensing data. In one example, the processing unit 200 is capable of predicting one piece of sensing data from another piece of sensing data and using it as input information, such as the generation of position information from input image information. In addition, the processing unit 200 is also capable of generating one piece of sensing data from a plurality of other pieces of sensing data. In addition, the processing unit 200 is also capable of predicting necessary information and generating predetermined information from sensing data.

### (1-3. Output unit)

The output unit 300 outputs information provided from the processing unit 200 to a user (who may be the same as or different from the user of the input unit 100), an external device, or other services. For example, the output unit 300 may include software or the like that provides information to an output device, a control device, or an external service.

The output device outputs the information provided from the processing unit 200 in a format that is perceived by a sense such as a visual sense, a hearing sense, a tactile sense, an olfactory sense, or a taste sense of the user (who may be the same as or different from the user of the input unit 100). For example, the output device is a display that outputs information through an image. Note that the display is not limited to a reflective or self-luminous display such as a liquid crystal display (LCD) or an organic electro-luminescence (EL) display and includes a combination of a light source and a waveguide that guides light for image display to the user's eyes, similar to those used in wearable devices or the like. Further, the output device may include a speaker to output information through a sound. The output device may also include a projector, a vibrator, or the like.

The control device controls a device on the basis of information provided from the processing unit 200. The device controlled may be included in a device that realizes the output unit 300 or may be an external device. More specifically, the control device includes, for example, a processor or a processing circuit that generates a control command. In the case where the control device controls an external device, the output unit 300 may further include a communication device that transmits a control command to the external device. For example, the control device controls a printer that outputs information provided from the processing unit 200 as a printed material. The control device may include a driver that controls writing of information provided from the processing unit 200 to a storage device or a removable recording medium. Alternatively, the control device may control devices other than the device that outputs or records information provided from the processing unit 200. For example, the control device may cause a lighting device to activate lights, cause a television to turn the display off, cause an audio device to adjust the volume, or cause a robot to control its movement or the like.

Further, the control apparatus can control the input apparatus included in the input unit 100. In other words, the control apparatus is capable of controlling the input apparatus so that the input apparatus acquires predetermined information. In addition, the control apparatus and the input apparatus can be implemented in the same device. This also allows the input apparatus to control other input apparatuses. In one example, in a case where there is a plurality of camera devices, only one is activated normally for the purpose of power saving, but in recognizing a person, one camera device being activated causes other camera devices connected thereto to be activated.

The software that provides information to an external service provides, for example, information provided from the processing unit 200 to the external service using an API of the external service. The software may provide information to a server of an external service, for example, or may provide information to application software of a service that is being executed on a client device. The provided information may not necessarily be reflected immediately in the external service. For example, the information may be provided as a candidate for posting or transmission by the user to the external service. More specifically, the software may provide, for example, text that is used as a candidate for a uniform resource locator (URL) or a search keyword that the user inputs on browser software that is being executed on a client device. Further, for example, the software may post text, an image, a moving image, audio, or the like to an external service of social media or the like on the user's behalf.

An interface 350 is an interface between the processing unit 200 and the output unit 300. In one example, in a case where the processing unit 200 and the output unit 300 are implemented as separate devices, the interface 350 can include a wired or wireless communication interface. In addition, in a case where at least a part of the processing unit 200 and the output unit 300 are implemented in the same device, the interface 350 can include an interface in the device mentioned above. In addition, in a case where the output unit 300 is implemented in a distributed manner to a plurality of devices, the interface 350 can include different types of interfaces for the respective devices. In one example, the interface 350 can include both a communication interface and an in-device interface.

### (2. Functional configuration of processing unit)

### (2-1. Overall functional configuration)

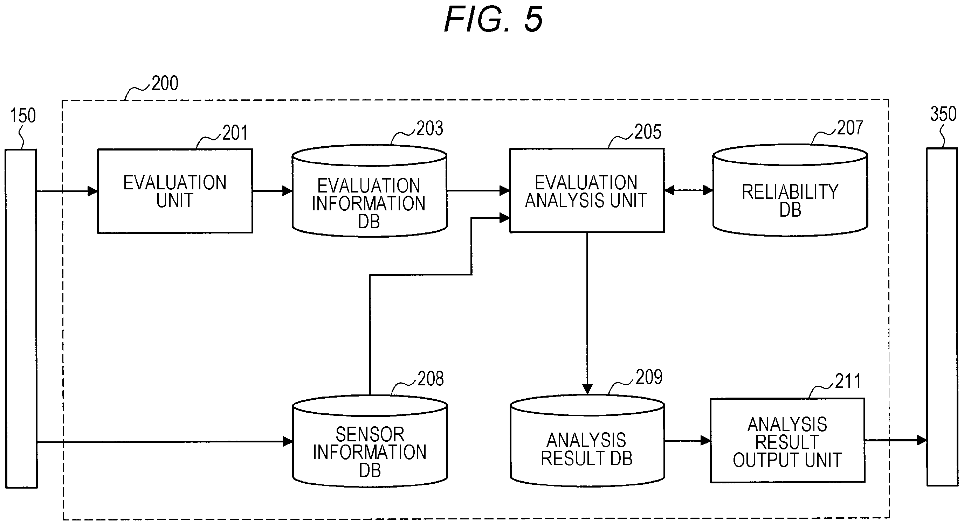

Fig. 5 is a block diagram illustrating a functional configuration example of the processing unit according to an embodiment of the present disclosure. Referring to Fig. 5, the processing unit 200 (control unit) includes an evaluation unit 201, an evaluation analysis unit 205, and an analysis result output unit 211. The functional configuration of each component is further described below.

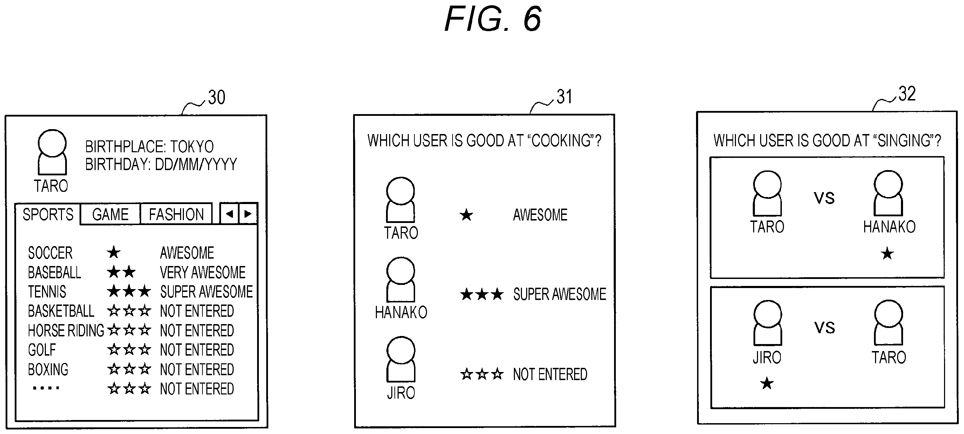

The evaluation unit 201 acquires various types of information indicating the evaluation of an evaluation target person from the input unit 100 via the interface 150. More specifically, in one example, the evaluation unit 201 acquires information from the operation input apparatus included in the input unit 100. The information acquired from the operation input apparatus is, in one example, evaluation information that is input manually by an evaluator through an evaluation input screen. The manual input evaluation information includes an absolute evaluation that evaluates a predetermined skill of the evaluation target person using a predetermined numerical value and a relative evaluation that performs the evaluation in comparison with other evaluation target persons. The skill (evaluation item) is not particularly limited, but examples thereof assume sports (such as soccer, baseball, and tennis), games, fashion, cooking, skillfulness of singing, quick feet, kindness, gentleness, and the like. In addition, the input numerical value can be a value obtained by changing the number of stars and words ("awesome/very awesome/super awesome") indicating the evaluation selected by the evaluator. Fig. 6 illustrates an example of an evaluation input screen on which such evaluation information can be input. As illustrated in Fig. 6, in one example, on an evaluation input screen 30, the input of the evaluation of each skill is performed by selecting the number of stars for each evaluation target person. In addition, on an evaluation input screen 31, the input of the evaluation of each evaluation target person is performed by selecting the number of stars or selecting a word for each skill. In addition, on an evaluation input screen 32, a relative evaluation is performed in which a plurality of evaluation target persons is compared for each skill and a person who is superior is selected.

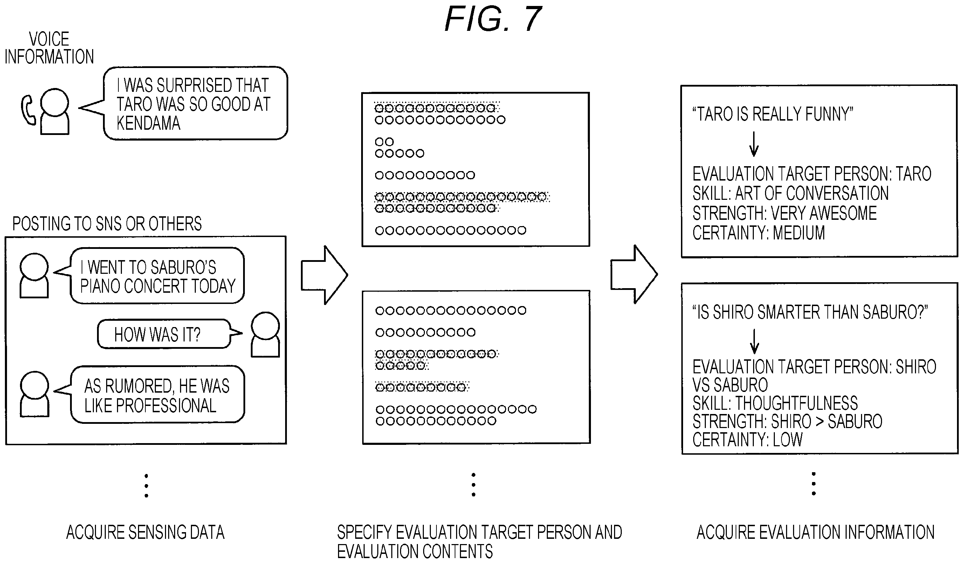

Further, in one example, the evaluation unit 201 acquires information from the sensor included in the input unit 100. The information acquired from the sensor is, in one example, the sensing data of the evaluator. The recent technique of the Internet of things (IoT) has enabled various devices to be connected to the Internet and acquire a large amount of sensing data on a daily basis. This makes it possible to acquire the evaluation by the evaluator other than manual input. In one example, it is possible to extract, from the user's phone conversation, information regarding the evaluation, such as "Mr. XX is good at playing basketball", "Mr. XX is very gentle", and "Mr. XX is better at cooking than Mr. YY", and to acquire it as the evaluation information. The evaluation unit 201 acquires and analyzes, in one example, voice, posting to SNS or the like, e-mail contents, and the like, as the sensing data, specifies an evaluation target person (who is to be evaluated) and the contents of evaluation (skill or strength), and acquires evaluation information. Fig. 7 illustrates an example of the acquisition of evaluation information from such sensing data. In a case where voice information when the evaluator is talking to someone, contents posted by the evaluator on the SNS, and the like are acquired as the sensing data from various sensors as shown on the left side of Fig. 7, a text string corresponding to an evaluation target person and contents of evaluation is specified by voice recognition or text analysis as shown in the middle of Fig. 7. The text string corresponding to the evaluation target person and the contents of evaluation can be specified using, in one example, a recognition machine obtained by machine learning. Subsequently, the evaluation information is acquired from the specified text string (evaluation target person and evaluation contents) as shown on the right side of Fig. 7. In one example, from a text string of "Taro is really funny", the evaluation information is acquired as follows, evaluation target person: Taro, skill: art of conversation, strength: very awesome, and certainty: medium. The "strength" corresponds to an evaluation indicating the level of ability of the skill. The evaluation unit 201 extracts a word indicating "strength" from a text string using, in one example, pre-registered dictionary data, and can determine whether it corresponds to any of the evaluations "awesome/very awesome/super awesome". In one example, "really funny" is judged to correspond to the evaluation of "very awesome" as an example. In addition, "certainty" is the acquired certainty level of the evaluation. In one example, the evaluation unit 201 judges that the certainty is high in a case where the evaluation is made on the basis of the asserted expression (such as "so funny!") and that the certainty is low in a case where the evaluation is made on the basis of the expression that is not asserted (such as "feel like funny...").

The evaluation unit 201 accumulates the acquired evaluation information in an evaluation information database (DB) 203.

The evaluation analysis unit 205 is capable of analyzing the evaluation information accumulated in the evaluation information DB 203 and calculating an evaluation value or estimating the reliability.

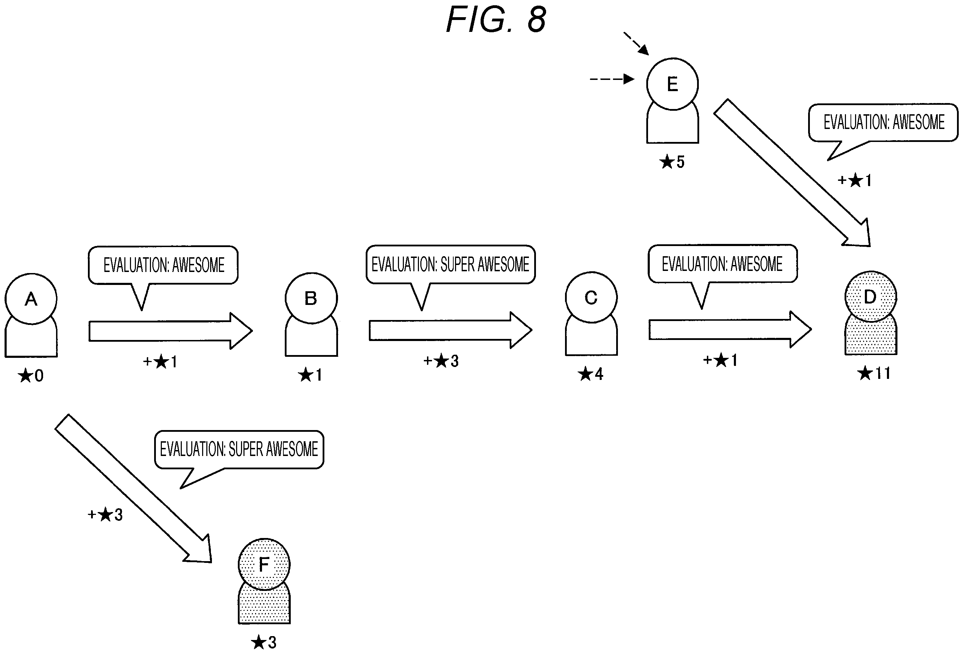

In one example, the evaluation analysis unit 205 calculates a more accurate evaluation value by propagating the evaluation among all users including the evaluator and the evaluation target person. In other words, it can be said that the evaluation for a certain skill by a person with a high evaluation for the skill is more accurate (reliable) than the evaluation of a person with a low evaluation for the skill. Thus, an evaluation performed by an evaluator with a high evaluation for a certain skill with respect to another person can be calculated by considering the evaluation for the evaluator oneself. An example of the calculation of an evaluation value based on the propagation of an evaluation is now described with reference to Fig. 8.

In the example illustrated in Fig. 8, in a case where a certain user evaluates another user (expressed by the number of stars), a result obtained by adding the evaluation of the evaluator oneself is set to an evaluation value. The repetition (propagation) of such addition of an evaluation allows an evaluation of, for example, 1 star performed by a person with a higher evaluation to be calculated higher than an evaluation of 1 star performed by a person with a lower evaluation. Specifically, in a case where a user A (evaluation: 0 stars) illustrated in Fig. 8 evaluates a user B as "awesome (evaluation: 1 star)", an evaluation of 1 star is given to the user B. Then, in a case where the user B (evaluation: 1 star) evaluates a user C as "super awesome (evaluation: 3 stars)", an evaluation of 4 stars obtained by adding the evaluation of the user B oneself to the evaluation performed by user B is given to the user C. In addition, in a case where the user C (evaluation: 4 stars) evaluates a user D as "awesome (evaluation: 1 star)", an evaluation of 5 stars obtained by adding the evaluation of the user C oneself to the evaluation performed by the user C to the user D. Moreover, a user E (evaluation: 5 stars) evaluates the user D as "awesome (evaluation: 1 star), and an evaluation (evaluation: 6 stars) based on the user E (evaluation: 5 stars) is also given to the user D. This causes the evaluation of the user D to be 11 stars. In this way, even in the case where the same "awesome (evaluation: 1 star)" is evaluated, it is possible to calculate a more accurate evaluation value by adding the evaluation of the user oneself who performed the evaluation.

Further, the evaluation analysis unit 205 is also capable of calculating the evaluation value of each evaluation target person after performing weighting with reference to the reliability of each evaluator accumulated in a reliability DB 207. This makes it possible to improve the accuracy of the evaluation value by being reflected in the higher evaluation value (analysis result) as the reliability of the user is higher.

Further, the evaluation analysis unit 205 is also capable of updating the reliability of each evaluator accumulated in the reliability DB 207. In one example, the evaluation analysis unit 205 compares the calculated evaluation value of the evaluation target person (evaluation value calculated by analyzing evaluation information by a large number of evaluators) with the evaluation information of the evaluator and updates the reliability of the relevant evaluator depending on the degree of matching.

Further, the evaluation analysis unit 205 is capable of calculating a more accurate evaluation value by repeatedly and alternately performing the update of the reliability and the calculation of the evaluation value with reference to the reliability.

Further, the evaluation analysis unit 205 is also capable of estimating the reliability of the evaluation of the evaluator on the basis of the sensing data of the evaluation target person. Various types of sensing data of each user (including an evaluation target person and an evaluator, and the same person can be an evaluator or evaluation target person) acquired from the input unit 100 are accumulated in a sensor information DB 208. Various types of sensing data of the user include, in one example, the user's captured image, voice, position information, biometric information (such as sweating and pulse), environmental information (such as temperature and humidity), and movement. These types of sensing data are acquired by, in one example, a wearable terminal worn by the user (e.g., such as head-mounted display (HMD), smart eyeglass, smartwatch, smart band, and smart earphone), a mobile terminal held by the evaluation target person (such as smartphone, portable phone, music player, and game machine), personal computers (PCs), environment sensors around the user (such as camera, microphone, and acceleration sensor), various electronic devices around the user (such as television, in-vehicle device, digital camera, and consumer electronics (CE) device), and are accumulated in the sensor information DB 208 from the input unit 100. Recent Internet of things (IoT) technology enables sensors to be installed on various objects used in daily life and to be connected to the Internet, resulting in acquiring large amounts of various types of sensing data on a daily basis. The sensor information DB 208 accumulates the sensing data of the user acquired in this way. The present embodiment is capable of refining the acquired evaluation value by using a result obtained by such an IoT sensing. In addition, the sensing data can include items such as scores at test, grades at school, sports tournament results, individual selling results, sales, and target growth rates.

The evaluation analysis unit 205 estimates the reliability of the evaluation performed by the evaluator using large amounts of various types of sensing data accumulated on a daily basis in this way. Specifically, the evaluation analysis unit 205 compares the evaluation information for the evaluation target person by the evaluator with the sensing data of the relevant evaluation target person accumulated in the sensor information DB 208, and estimates the reliability of the evaluation by the evaluator. The reliability of the evaluation is estimated for each evaluation item (the evaluation item is also referred herein to as "skill" or "field") and is stored in the reliability DB 207. Although the estimation algorithm is not particularly limited, in one example, the evaluation analysis unit 205 can estimate the reliability on the basis of the degree of matching or the like between the two of whether or not the evaluation information for the evaluation target person by the evaluator matches the corresponding sensing data. As a specific example, in one example, in a case where the user A evaluates that "Mr. B has quick feet", by comparing it with the actual time of the 50 meters or 100 meters running of the user B (an example of sensing data), it is determined whether or not the foot of the user B is really fast. The determination of "foot is fast" can be made by a national average depending on age or gender on the basis of the ranking in the school or the like, and such a determination criterion is set in advance. In addition, as the sensing data used for estimating the reliability, data that is close in time to the timing of the evaluation by the evaluator (e.g., such as three months before and after the timing of the evaluation) can be preferentially used, or what type of sensing data to use depending on the evaluation item can be appropriately determined. In addition, a processing result obtained by performing some processing on one or more pieces of sensing data can be used instead of using the sensing data as it is. In this way, by comparing the actual data with the evaluation and estimating the reliability of the evaluation, it is possible to grasp the improper evaluation. In addition, with no use of the evaluation information of the evaluator with low reliability (lower than a predetermined value) in the analysis of the evaluation, it is possible to eliminate an improper evaluation and output a more accurate evaluation value.

Further, the evaluation analysis unit 205 can calculate an integrated evaluation value by integrating the evaluation values calculated by the respective techniques described above. Specifically, the evaluation analysis unit 205 can calculate a deviation value for each skill of each evaluation target person as an integrated evaluation value.

The example of the evaluation analysis by the evaluation analysis unit 205 is described above. Moreover, the evaluation information used for calculating the evaluation value can be further associated with the certainty of the evaluation described with reference to Fig. 7. In addition, the evaluation analysis unit 205 calculates an evaluation value by normalizing each of the evaluation information performed in the forms of various expressions such as the number of stars and words. In this event, with respect to the relative evaluation, the evaluation analysis unit 205 is capable of converting the relative evaluation into the absolute evaluation by sorting the evaluation target persons so that all the relative evaluations match as much as possible. The evaluation analysis unit 205 accumulates the evaluation value that is calculated (analyzed) in this way in an analysis result DB 209 as an analysis result.

The analysis result output unit 211 performs control to output the analysis result (evaluation value) of each evaluation target person accumulated in the analysis result DB 209. The analysis result is provided to the output unit 300 via the interface 350 and is output by the output unit 300. In addition, the analysis result output unit 211 can display the information indicating the reliability of the evaluator on an evaluation input screen or the like. In one example, in a case of the reliability exceeds a predetermined value, by presenting it to the evaluator together with a comment of "You have an eye on this evaluation item", it is possible to increase the motivation of the evaluation input of the evaluator.

In the present embodiment, it is possible to increase the understanding of the side receiving the evaluation and prevent attacks on an individual evaluator by displaying only the analysis result as the consensus of many evaluators to the evaluation target person instead of the evaluation individually given by each user as it is. In addition, the evaluation individually given by each user is not presented as it is, so the psychological barrier on the side of the evaluator can be reduced, and the evaluations of people can be changed to entertainment. In addition, the visualization of the evaluation of oneself viewed from others makes it possible to objectively view oneself. In addition, by allowing the evaluation values of the analysis results for various abilities to be visualized over a lifetime in a grade table or deviation value, it is possible to promote individual growth. In addition, the visualization of the evaluation of each user makes it possible to prevent a mismatch in work assignments or the like.

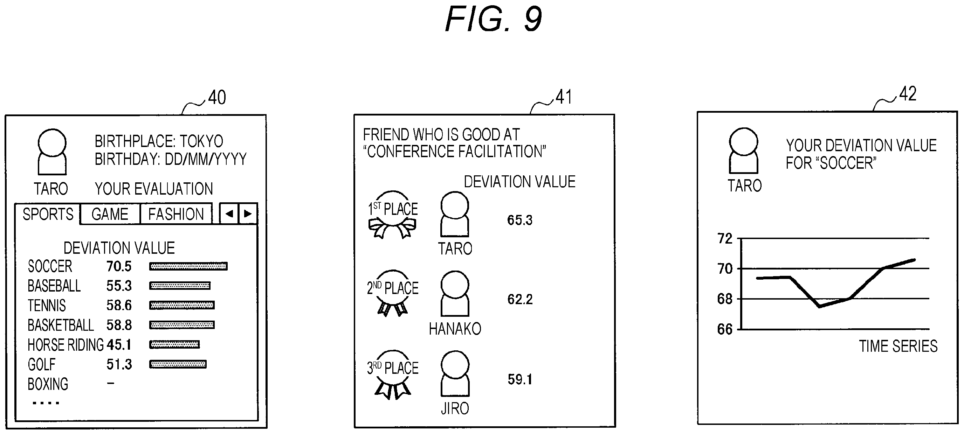

The analysis result output unit 211 can generate a screen indicating the analysis result and output the generated screen information. An example of a display screen of the analysis result illustrated in Fig. 9 is now described. As illustrated in Fig. 9, in one example, on an analysis result screen 40, the evaluation value of each skill is presented as, in one example, a deviation value for each evaluation target person. In addition, on an analysis result screen 41, the evaluation value of each evaluation target person is presented as a deviation value for each skill. In addition, on an analysis result screen 42, the time series of the evaluation values of the skill of the evaluation target person are presented as time series of the deviation values.

More specifically, for example, the information generated by the analysis result output unit 211 can be output from an output apparatus such as a display or a speaker included in the output unit 300 in the form of an image, sound, or the like. In addition, the information generated by the analysis result output unit 211 can be output in the form of a printed matter from a printer controlled by a control apparatus included in the output unit 300 or can be recorded in the form of electronic data on a storage device or removable recording media. Alternatively, the information generated by the analysis result output unit 211 can be used for control of the device by a control apparatus included in the output unit 300. In addition, the information generated by the analysis result output unit 211 can be provided to an external service via software, which is included in the output unit 300 and provides the external service with information.

### (3. Processing procedure)

### (3-1. Overall processing procedure)

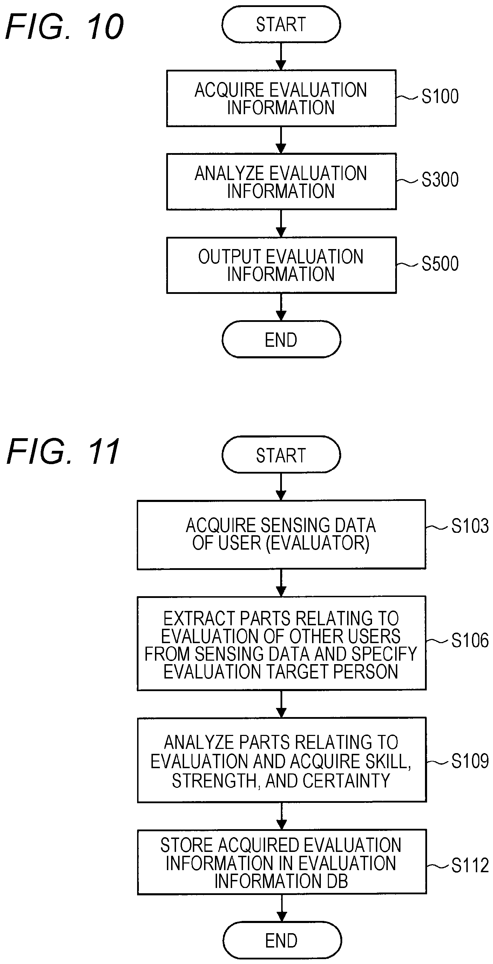

Fig. 10 is a flowchart illustrating the overall processing procedure of the information processing system (evaluation visualization system) according to an embodiment of the present disclosure. Referring to Fig. 10, in the first place, the evaluation unit 201 acquires evaluation information (step S100). As described above, the evaluation unit 201 acquires the evaluation information from an input means such as sensor, input apparatus, or software included in the input unit 100. The acquired evaluation information is accumulated in the evaluation information DB 203.

Subsequently, the evaluation analysis unit 205 analyzes the evaluation information (step S300). As described above, the evaluation analysis unit 205 analyzes the evaluation for each skill of the evaluation target person on the basis of a large number of pieces of evaluation information accumulated in the evaluation information DB 203, and outputs an evaluation value. In this event, the evaluation analysis unit 205 is also capable of estimating and updating the reliability of the evaluator. In addition, the evaluation analysis unit 205 is capable of calculating a more accurate evaluation value with reference to the reliability of the evaluator.

Subsequently, the analysis result output unit 211 outputs the analysis result (step S500). As described above, the analysis result output unit 211 presents the evaluation value, which is obtained by analyzing the evaluation information of all the users, to the users, instead of the evaluations of the respective users as they are.

### (3-2. Acquisition of evaluation information)

Fig. 11 is a flowchart illustrating an example of processing of acquiring evaluation information from sensing data of the evaluator. As illustrated in Fig. 11, in the first place, the evaluation unit 201, when acquiring sensing data (such as voice information, image information, and text information) of the evaluator (step S103), extracts, from the sensing data, parts relating to the evaluation of another user, and specifies an evaluation target person (step S106).

Subsequently, the evaluation unit 201 analyzes parts relating to the evaluation and acquires skill (evaluation item), strength (evaluation), and certainty (step S109).

Then, the evaluation unit 201 stores the acquired evaluation information in the evaluation information DB 203 (step S112).

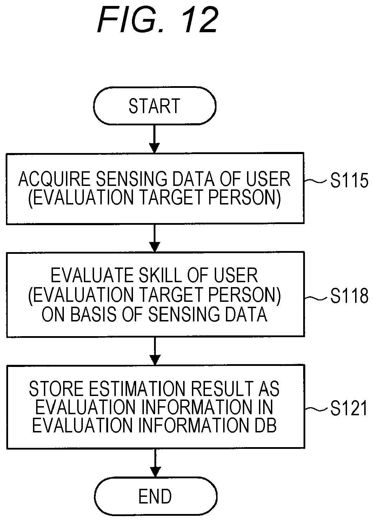

Fig. 12 is a flowchart illustrating an example of processing of acquiring evaluation information from sensing data of an evaluation target person. As illustrated in Fig. 12, in the first place, the evaluation unit 201, when acquiring the sensing data of the evaluation target (step S115), evaluates the skill of the evaluation target on the basis of the sensing data (step S118). In one example, the evaluation unit 201, in a case where a result of a sports test or a result of a sports tournament is acquired as the sensing data, is capable of acquiring the evaluation information such as fast feet, endurance, and good soccer as compared with the average value or variance value of the same-age of the evaluation target person. The evaluation unit 201 is capable of determining a skill (ability) on the basis of whether or not the sensing data, which is an objective measured value of the evaluation target person, satisfies a predetermined condition, or the like.

Then, the evaluation unit 201 stores the acquired evaluation information in the evaluation information DB 203 (step S121).

### (3-3. Analysis of evaluation information)

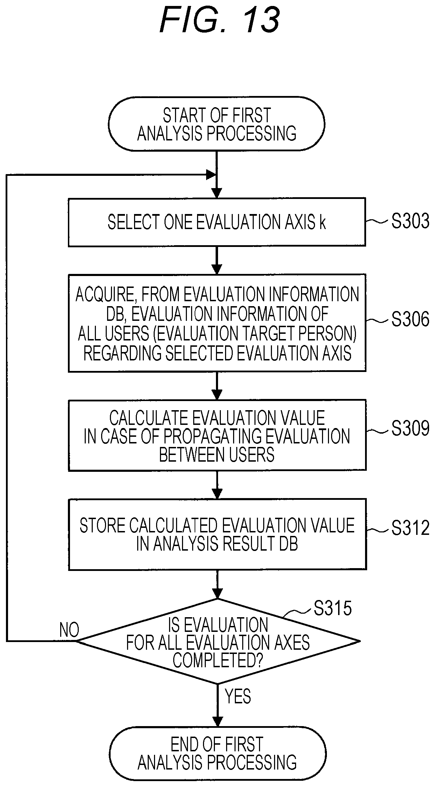

The analysis processing of the evaluation information according to the present embodiment is now described in detail with reference to Figs. 13 to 17.

### (3-3-1. First analysis processing)

Fig. 13 is a flowchart illustrating an example of first analysis processing of calculating an evaluation value on the basis of evaluation propagation between users.

As illustrated in Fig. 13, first, the evaluation analysis unit 205 selects one evaluation axis k (step S303). The evaluation axis k corresponds to the "skill" mentioned above.

Subsequently, the evaluation analysis unit 205 acquires, from the evaluation information DB 203, evaluation information of all the users (all the evaluation target persons) regarding the selected evaluation axis k (step S306).

Subsequently, the evaluation analysis unit 205 calculates an evaluation value in the case where the evaluation is propagated between the users (step S309). In one example, as illustrated in Fig. 8 referenced above, the evaluation analysis unit 205 calculates an evaluation value of the evaluation target person by adding the evaluation value of the relevant evaluation axis k of the evaluator oneself who performed the evaluation. Although a specific algorithm for such calculation of the evaluation value based on the propagation between the users is not particularly limited, in one example, it is possible to perform the calculation using the PageRank algorithm.

Subsequently, the evaluation analysis unit 205 stores the calculated evaluation value in the analysis result DB 209 (step S209).

The processing of steps S303 to S312 described above is performed for all the evaluation axes (step S315). This allows an evaluation value of each skill of a certain user (evaluator target person) to be calculated.

### (3-3-2. Second analysis processing)

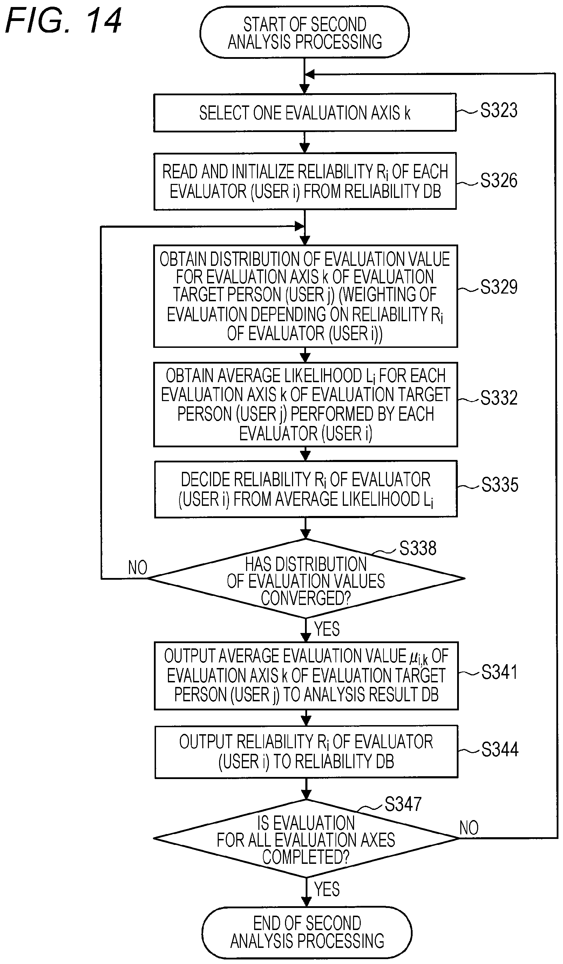

Fig. 14 is a flowchart illustrating an example of second analysis processing of calculating an evaluation value with reference to the reliability of an evaluator and updating the reliability.

As illustrated in Fig. 14, first, the evaluation analysis unit 205 selects one evaluation axis k (step S323).

Subsequently, the evaluation analysis unit 205 reads and initializes a reliability Ri of each evaluator (user i) from the reliability DB 207 (step S326). The reliability Ri of each evaluator (user i) can be provided for each evaluation axis k, and the evaluation analysis unit 205 reads and initializes the reliability Ri of each evaluator (user i) of the selected evaluation axis k.

Subsequently, the evaluation analysis unit 205 obtains the distribution of the evaluation values (average µ_{i,k} and variance σ_{i,k}) for the evaluation axis k of an evaluation target person (user j) (step S329). The evaluation analysis unit 205 can obtain the distribution of the evaluation values on the basis of the result of the first analysis processing described above. In this event, the evaluation analysis unit 205 obtains the distribution of evaluation values after weighting the evaluation of the evaluator (user i) depending on the reliability Ri of the evaluator (user i).

Subsequently, the evaluation analysis unit 205 obtains an average likelihood Li for each evaluation axis k of the evaluation target person (user j) performed by each evaluator (user i) (step S332).

Subsequently, the evaluation analysis unit 205 decides the reliability Ri of the evaluator (user i) from the average likelihood Li (step S335). In other words, the evaluation analysis unit 205 performs processing of increasing the reliability of the evaluator who has performed the evaluation that matches the evaluation by all the evaluators and decreasing the reliability of the evaluator who has performed the evaluation out of the evaluation by the all the evaluators (updating of reliability). The reliability can be, in one example, a correlation coefficient of "-1 to 1".

Subsequently, the evaluation analysis unit 205 repeats the processing of steps S329 to S335 described above until the distribution of the evaluation values converges (step S338). In other words, in step S329 above performed repeatedly, the distribution of the evaluation values is obtained after performing again the weighting of the evaluation depending on the reliability updated in step S335 (analysis processing), and the updating of the reliability and the analysis processing of the evaluation value are alternately repeated until the distribution converges.

Subsequently, if the distribution of the evaluation values converges (Yes in step S338), the evaluation analysis unit 205 outputs the average evaluation value µ_{i,k} of the evaluation axis k of the evaluation target person (user j) to the analysis result DB 209 (step S341).

Subsequently, the evaluation analysis unit 205 outputs the reliability Ri of the evaluator (user i) to the reliability DB 209 (step S344).

Then, the evaluation analysis unit 205 repeats the processing of steps S323 to S344 described above for all the evaluation axes (step S347).

### (Reliability estimation processing)

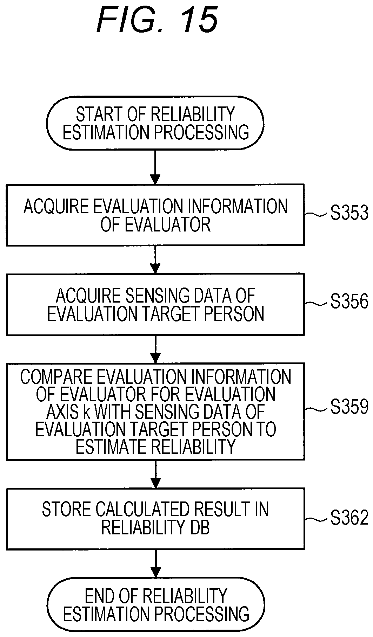

The reliability estimation processing according to an embodiment of the present disclosure is not limited to the example described with reference to Fig. 14, and can be estimated by comparison with, in one example, sensing data of an evaluation target person. A description thereof is now given with reference to Fig. 15.

Fig. 15 is a flowchart illustrating an example of processing of estimating the reliability of an evaluator on the basis of sensing data of an evaluation target person.

As illustrated in Fig. 15, in the first place, the evaluation analysis unit 205 acquires evaluation information of the evaluator (step S353).

Subsequently, the evaluation analysis unit 205 acquires sensing information of the evaluation target person (step S356).

Subsequently, the evaluation analysis unit 205 compares the evaluation information of the evaluator for the evaluation axis k with the sensing information of the evaluation target person to estimate the reliability (step S359). Specifically, the evaluation analysis unit 205 estimates the reliability of the relevant evaluator on the evaluation axis k depending on whether or not the evaluation information of the evaluator matches the processing result of the sensing data of the evaluation target person, the degree of matching, or the like. In other words, the evaluation analysis unit 205 estimates that the reliability is high in the case where the evaluation information of the evaluator matches the processing result of the sensing data, a case where the degree of matching is high, or a case where the sensing data satisfies a predetermined condition corresponding to the evaluation information.

Subsequently, the evaluation analysis unit 205 stores the calculation result in the reliability DB 207 (step S362).

### (3-3-3. Third analysis processing)

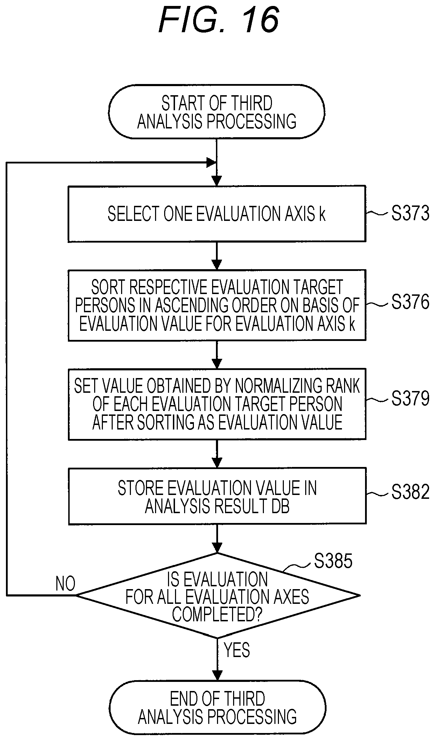

Subsequently, a case where the evaluation value is calculated on the basis of the relative evaluation is now described with reference to Fig. 16. Fig. 16 is a flowchart illustrating an example of the third analysis processing of calculating an evaluation value on the basis of the relative evaluation.

As illustrated in Fig. 16, first, the evaluation analysis unit 205 selects one evaluation axis k (step S373).

Subsequently, the evaluation analysis unit 205 sorts the respective evaluation target persons in ascending order on the basis of the evaluation value (relative evaluation) for the evaluation axis k (step S376).

Subsequently, the evaluation analysis unit 205 normalizes the rank of each evaluation target person after sorting and sets the resultant as an evaluation value (absolute evaluation value) (step S379).

Subsequently, the evaluation analysis unit 205 stores the calculated evaluation value (absolute evaluation value) in the analysis result DB 209 (step S382).

Then, the evaluation analysis unit 205 repeats the processing of steps S373 to S382 described above for all the evaluation axes (step S385).

In this way, it is possible to convert the relative evaluation into the absolute evaluation and output it as the analysis result. In addition, the evaluation analysis unit 205 can also combine the analysis result obtained from the relative evaluation and the analysis result obtained from the absolute evaluation into one absolute evaluation, in one example, by simply averaging the results, or the like.

### (3-3-4. Integration processing of evaluation values (analysis results))

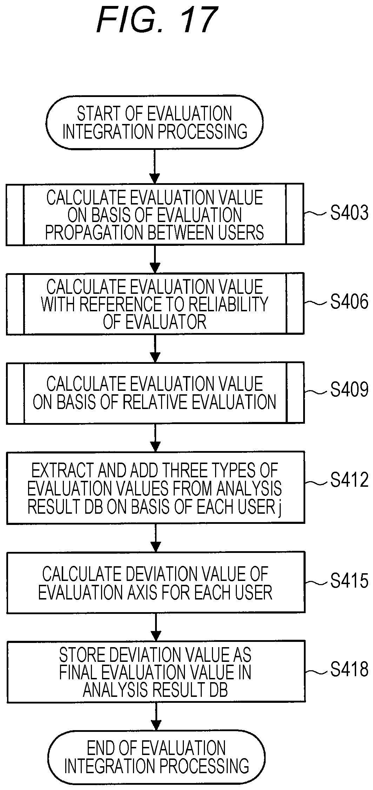

The above description is given that the evaluation value by the analysis of the evaluation information according to the present embodiment can be output using a plurality of techniques. Moreover, in the present embodiment, the evaluation values calculated by the plurality of techniques can be integrated and output as an integrated evaluation value. The description thereof is now made with reference to Fig. 17.

Fig. 17 is a flowchart illustrating an example of the integration processing of the analyzed evaluation values.

As illustrated in Fig. 17, the evaluation analysis unit 205 calculates an evaluation value on the basis of evaluation propagation between users (step S403).

Subsequently, the evaluation analysis unit 205 calculates an evaluation value with reference to the reliability of the evaluator (step S406).

Subsequently, the evaluation analysis unit 205 calculates an evaluation value on the basis of the relative evaluation (step S409).

Subsequently, the evaluation analysis unit 205 extracts, from the analysis result DB 209, the three types of evaluation values calculated in steps S403 to S409 described above for each user j and adds them (step S412).

Subsequently, the evaluation analysis unit 205 calculates a deviation value of the evaluation axis for each user (step S415).

Then, the evaluation analysis unit 205 stores the deviation value in the analysis result DB 209 as a final evaluation value (step S418).

### (4. Application examples)

Application examples of the present embodiment are now described.

### (4-1. Automatic evaluation)

The evaluation visualization system according to the present embodiment implements automatic evaluation by learning a recognition machine from the evaluation information and the sensing data. This makes it possible to calculate, in one example, an evaluation value for an item that has not been evaluated by another person.

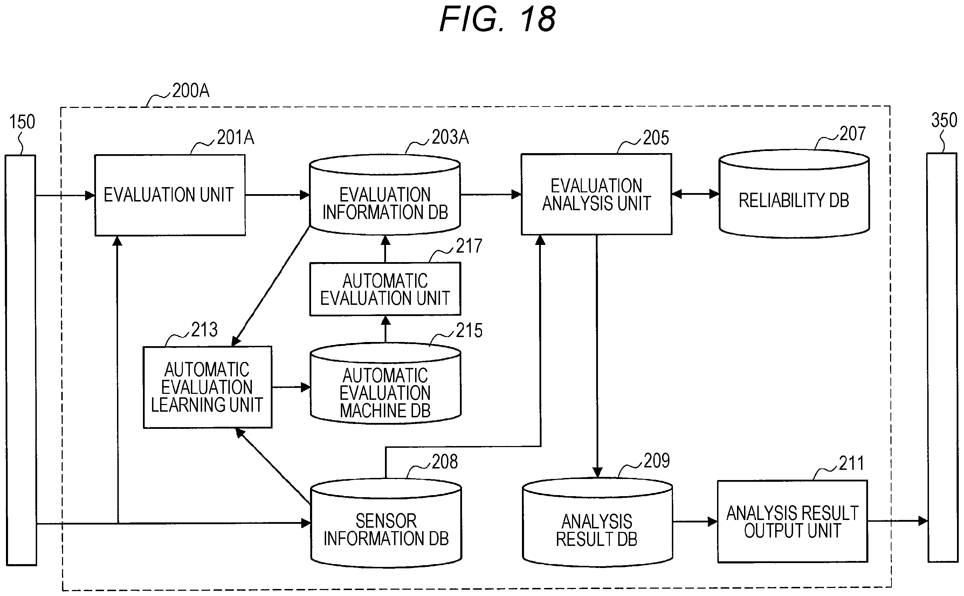

Fig. 18 is a block diagram illustrating a functional configuration example of a processing unit 200A that performs evaluation learning and automatic evaluation. As illustrated in Fig. 18, the processing unit 200A includes an evaluation unit 201A, the evaluation analysis unit 205, the analysis result output unit 211, an automatic evaluation learning unit 213, and an automatic evaluation unit 217. The functional configuration of each component is further described below. Moreover, the detailed description of the functional components denoted by the same reference numerals as those described with reference to Fig. 5 is omitted.

The evaluation unit 201A is capable of acquiring evaluation information from the input sensing data of the evaluation target person and storing the evaluation information in an evaluation information DB 203A, similarly to the evaluation unit 201 described above with reference to Fig. 12. In particular, in the case where the sensing data is an objective fact such as a result of a test or a result of a sports tournament, it is possible to acquire more reliably the evaluation information.

On the other hand, even in a case where the sensing data is biometric information or position information, or the like, and it is difficult to acquire the evaluation information from the sensing data, it is possible to perform the automatic evaluation by using an automatic evaluation machine acquired by machine learning. Specifically, it can be performed by the automatic evaluation learning unit 213 and the automatic evaluation unit 217 described below.

The automatic evaluation learning unit 213 performs learning of the automatic evaluation machine on the basis of the sensing data of the evaluation target person stored in the sensor information DB 208 and the evaluation information by the evaluator performed on the relevant evaluation target person. Specifically, the automatic evaluation learning unit 213 acquires evaluation information Y regarding a certain item from the evaluation information DB 203A and sensing data X regarding an evaluation target person who has evaluated the same item from the sensor information DB 208. Subsequently, the automatic evaluation learning unit 213 performs machine learning for estimating the evaluation information Y from the sensing data X, and generates an automatic evaluation machine Y = F(X). The automatic evaluation learning unit 213 stores the generated automatic evaluation machine in an automatic evaluation machine DB 215.

The automatic evaluation unit 217 acquires the sensing data X regarding the evaluation target person from the sensor information DB 208 and acquires the evaluation machine F(X) from the automatic evaluation machine DB 215, and performs the automatic evaluation of the evaluation target person. In other words, the automatic evaluation unit 217 evaluates Y = F(X) and obtains evaluation information Y of the evaluation target person. The automatic evaluation unit 217 stores the obtained evaluation information Y in the evaluation information DB 203A. Moreover, the automatic evaluation machine DB 215 can store a preset automatic evaluation machine.

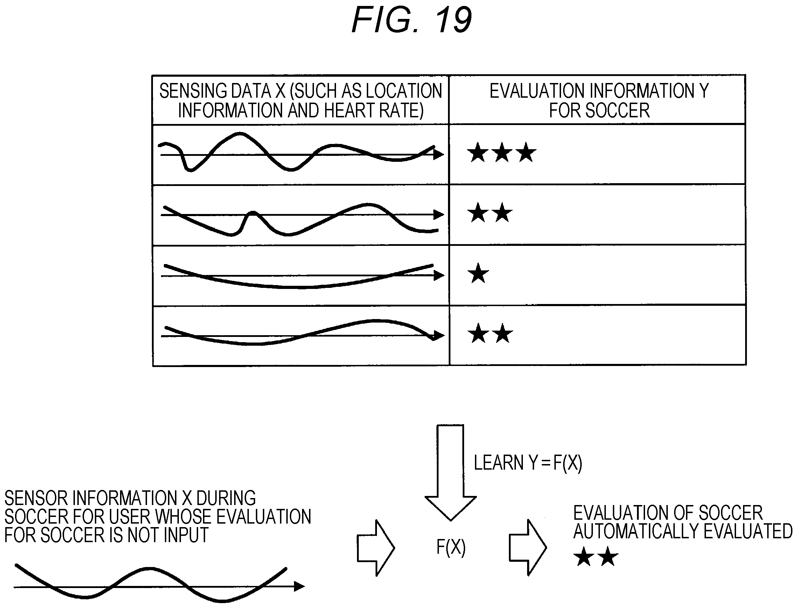

A diagram to describe a specific example of automatic evaluation is now illustrated in Fig. 19. As illustrated in Fig. 19, in one example, the automatic evaluation unit 217 learns the automatic evaluation machine Y = F (X) on the basis of the sensing data X (such as position information and heart rate) when a certain evaluation target person plays soccer and the evaluation information Y of soccer for the relevant evaluation target person. Subsequently, the automatic evaluation unit 217, in a case where the sensing data X during the soccer of the evaluation target person to whom the evaluation of the soccer has not been input is acquired, performs the evaluation using the automatic evaluation machine Y = F (X) and acquires the automatic evaluation of soccer for the relevant evaluation target person.

As described above, the evaluation visualization system of the present embodiment is capable of acquiring the evaluation information even for an item that has not been evaluated by another person by using a learning machine.

Further, the evaluation visualization system of the present embodiment is capable of acquiring subjective evaluations such as "gentle", "kindness", and "good looking" from the sensing data of the evaluation target person by using the learning machine.

### (4-2. Causal analysis)

Further, in the evaluation visualization system according to the present embodiment, in the output of the evaluation result, in a case where the evaluation changes in a time series, it is possible to present factors of the change. This allows the evaluation target person to know why the target person's evaluation has changed, and thus it is possible to take actions to enhance desirable changes or reduce undesirable changes.

As a factor in a case where the evaluation changes in a time series, in one example, causal analysis between sensing data and evaluation information of an evaluation target person is used. The configuration and processing procedure of the evaluation visualization system for performing such causal analysis are described with reference to the drawings.

### (Configuration)

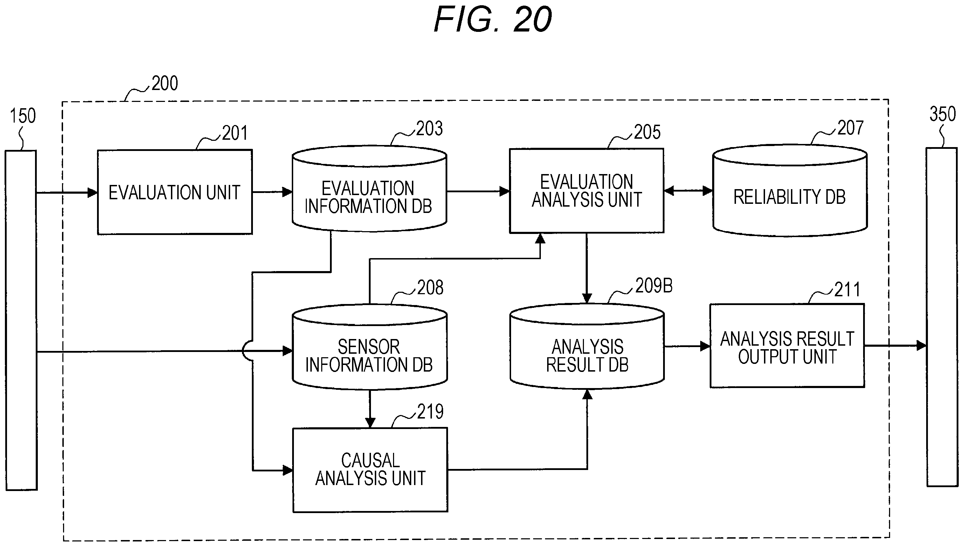

Fig. 20 is a block diagram illustrating a functional configuration example of a processing unit 200B that performs the causal analysis. As illustrated in Fig. 20, the processing unit 200B includes the evaluation unit 201, the evaluation analysis unit 205, the analysis result output unit 211, and a causal analysis unit 219. Moreover, the detailed description of the functional components denoted by the same reference numerals as those described with reference to Fig. 5 is omitted.

The causal analysis unit 219 performs a causal analysis between the sensing data of the evaluation target person acquired from the sensor information DB 208 and the evaluation information of the evaluation target person acquired from the evaluation information DB 203, and stores the resultant analysis result in an analysis result DB 209B.

The causal analysis is an analysis technique that outputs a causal relationship between variables in the form of a directed graph when observation results of a plurality of variables are given. In one example, as illustrated in Fig. 20, a data set for causal analysis is prepared, and the result of causal analysis is output. The data used in the causal analysis can be created for each user at each evaluated timing. In one example, in the data set for causal analysis illustrated in Fig. 20, data 1 is data when a user A is evaluated for the first time, data 2 is data when the user A is evaluated for the second time, and data 3 is data when a user B is evaluated for the first time. In addition, the variables include the sensing result and the evaluation result. In one example, a variable A illustrated in Fig. 10 is a practice amount of soccer, a variable B is sleep time, and a variable C is evaluation information for soccer.

### (Processing procedure)

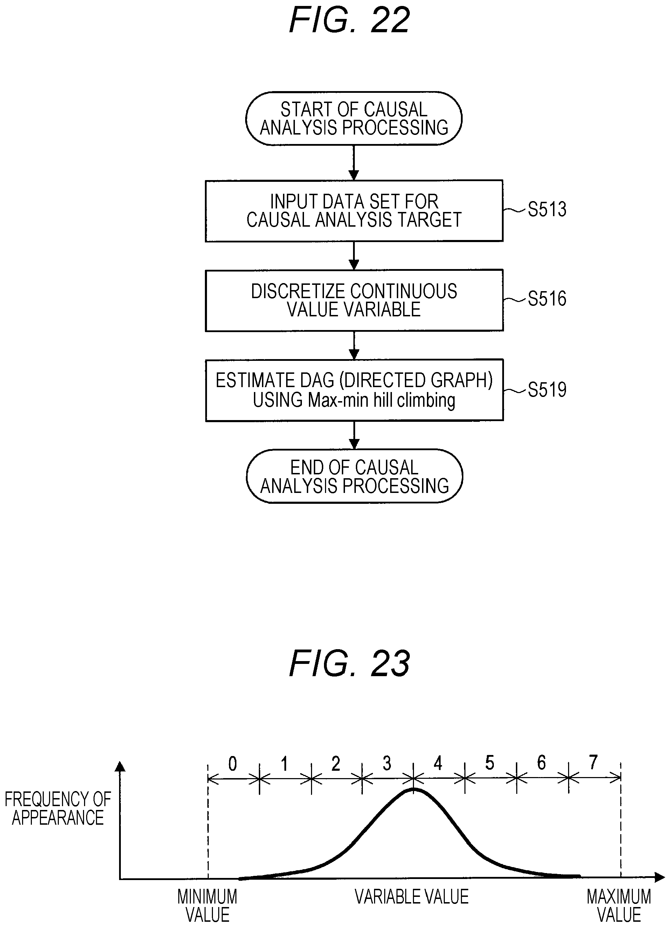

Fig. 22 is a flowchart illustrating the procedure of the causal analysis processing performed by the causal analysis unit 219. As illustrated in Fig. 22, in the first place, a data set to be subjected to the causal analysis is input (step S513).

Subsequently, the causal analysis unit 219 performs discretization processing of the continuous value variable (step S516). In the causal analysis processing performed by the causal analysis unit 219, in one example, in a case where the Max-min hill-climbing algorithm is used, only the discretized variable is handled but continuous values is not handled, so the discretization processing is performed. In the present embodiment, in one example, as illustrated in Fig. 23, the range between the minimum value and the maximum value is evenly discretized to a predetermined number. In the example illustrated in Fig. 23, in one example, in the case where the continuous values are discretized into eight stages (0, 1, 2, ..., 7), the continuous value is converted into the discrete value by dividing the range eight from the minimum value to the maximum value into eight.

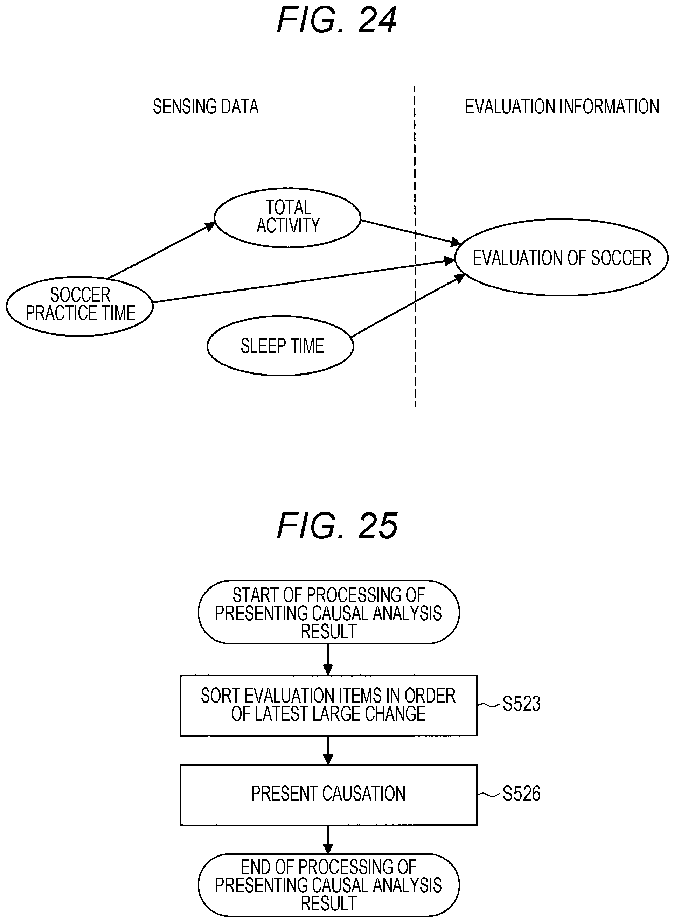

Subsequently, the causal analysis unit 219 estimates a DAG (directed graph) using the Max-min hill-climbing (step S519). Specifically, the causal analysis unit 219 can obtain an estimation result as to which other variable is causing for each variable of the data set. An example of the causal analysis between sensing data and evaluation information is now illustrated in Fig. 24. As illustrated in Fig. 24, the causal analysis allows the causality between variables of the sensing data such as the soccer practice time, the total activity, and the sleeping time and the evaluation information of soccer to be estimated. The arrows in the figure indicate that there is the causality between the variables. The causal analysis unit 219 stores the estimation result obtained by the causal analysis in the analysis result DB 209B.

Fig. 25 is a flowchart illustrating the procedure of presentation processing of the causal analysis result. As illustrated in Fig. 25, in the first place, the analysis result output unit 211 sorts the respective evaluation items of the evaluation target person in the order in which the latest evaluation change is large (step S523) .

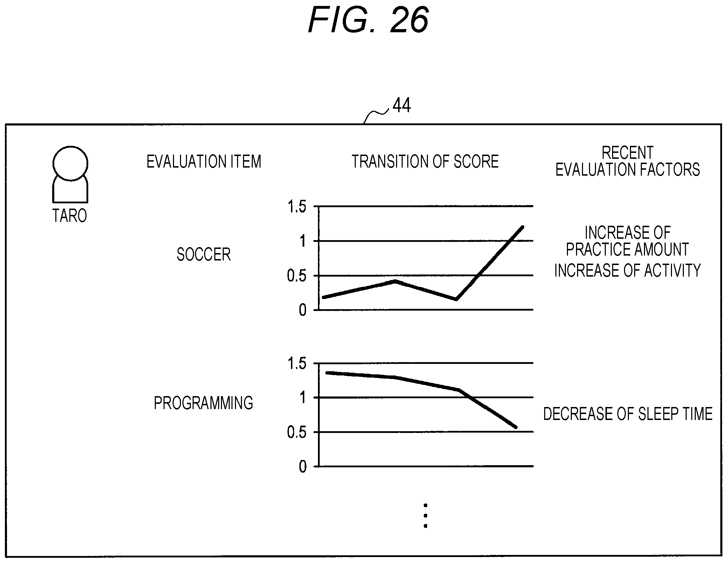

Subsequently, the analysis result output unit 211 presents a causal analysis result as a factor of a change in evaluations in each evaluation item (step S526). Specifically, the analysis result output unit 211 indicates the sensing data whose causality with the latest evaluation is estimated on the basis of the estimation result. An example of a display screen of the analysis result is now illustrated in Fig. 26. As illustrated in Fig. 26, in one example, the time series of evaluation values is displayed in the order of evaluation items having the large change in the latest evaluations, and further as factors of the latest evaluations in each evaluation item, a result of the causal analysis such as "increase in practice amount" or "increase in activity" is displayed. This makes it possible for the evaluation target person to know the reason why the person's evaluation has changed.

### (4-3. Time-series analysis)

Further, the evaluation visualization system according to the present embodiment is capable of analyzing in time series the evaluation of the evaluator and the analysis result of the evaluation of all the evaluators, and in a case where the overall evaluation follows the evaluation of the evaluator, and feeding a fact that the evaluator has foresight back to the evaluator.

In an example of the estimation of the reliability of the evaluator described above, an evaluation value (analysis result) calculated by analyzing the evaluation information of a large number of evaluators (e.g., all the evaluators) is compared with evaluation information of a certain evaluator and the reliability of the relevant evaluator is estimated depending on the degree of matching, but in this case, the minority is excluded. However, in a case where there is an evaluation user A who is good at finding human ability, if the evaluation of the user A is different from the evaluations of other general evaluation users, the reliability of the evaluation user A can be reduced in some cases. Thus, in the present application example, a time-series relationship of evaluation by the evaluator is analyzed, and an evaluator with foresight is extracted. On the basis of the extraction result, the evaluator who is determined to have foresight has higher reliability and preferentially reflects it in the evaluation value, which makes it possible to improve the accuracy of the evaluation value (analysis result). In addition, by feeding a fact that there is an eye to see (foresight) back to the evaluator, the evaluator is able to know in which field the evaluator has foresight and the user experience is enhanced.

The configuration and processing procedure of the evaluation visualization system for performing such time-series analysis are described with reference to the drawings.

### (Configuration)

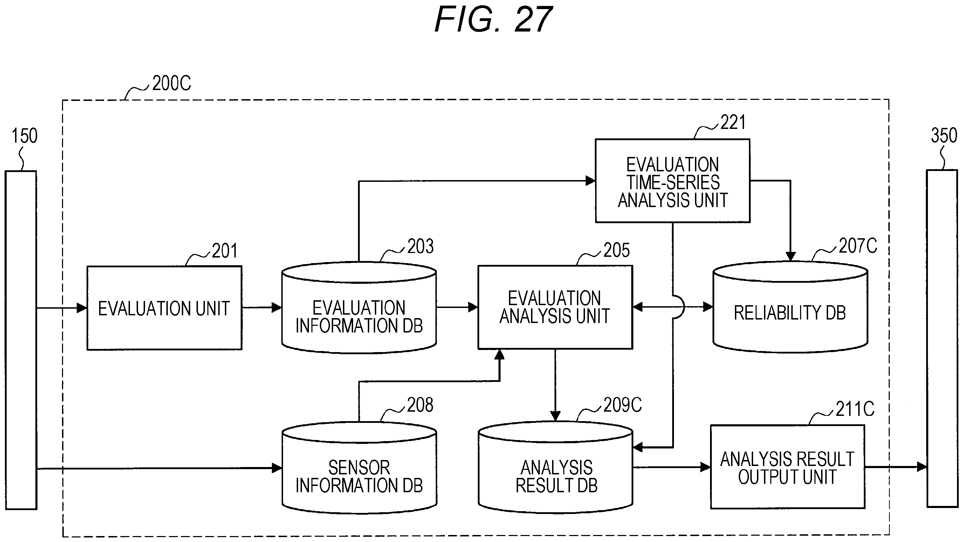

Fig. 27 is a block diagram showing an example of a functional configuration of a processing unit 200C that performs the time-series causal analysis of evaluation. As illustrated in Fig. 27, the processing unit 200C includes the evaluation unit 201, the evaluation analysis unit 205, the analysis result output unit 211, and an evaluation time-series analysis unit 221. Moreover, the detailed description of the functional components denoted by the same reference numerals as those described with reference to Fig. 5 is omitted.

The evaluation time-series analysis unit 221 acquires the evaluation information by the evaluator from the evaluation information DB 203 and performs time-series causal analysis between the evaluation information performed by a certain evaluator and the evaluation information of all the evaluators. Specifically, the evaluation time-series analysis unit 221 compares the time series of the evaluation values obtained by analyzing the evaluation information of all the evaluators with the evaluation information performed by a certain evaluator. In a case where the evaluation information of all the evaluation values is close to the evaluation of the relevant evaluator, the evaluation time-series analysis unit 221 determines that the evaluator has foresight and performs processing of increasing the reliability (processing of updating the reliability of the relevant evaluator stored in a reliability DB 207C). In addition, the evaluation time-series analysis unit 221 analyzes the entire evaluation value by preferentially reflecting (e.g., performing weighting) the evaluation information of the evaluator who has determined to have foresight, and stores the analysis result in the analysis result DB 209C.

As described above, the evaluation time-series analysis unit 221 performs the time-series causal analysis of the evaluation value, updates the reliability, and re-analyzes all the evaluation values, which makes it possible to output a more accurate evaluation value.

An analysis result output unit 211C generates and outputs a display screen for providing feedback to an evaluator with high reliability on the basis of the result of the evaluation time-series causal analysis. This allows the evaluator to know in which field the evaluator has foresight and to enhance the user experience. The "High reliability" is, in one example, the degree of reliability that exceeds a predetermined value. The threshold value can be appropriately set fluidly depending on each evaluation item or a time-series causal analysis result of each evaluation item (e.g., the magnitude of the change of the evaluation time-series or the elapsed time, or the like).

### (Example of display screen)

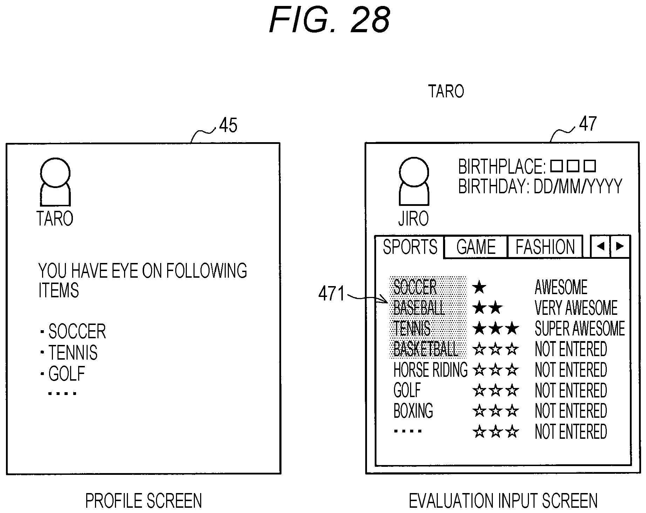

Fig. 28 is a diagram showing an example of a display screen for feeding back the result of the evaluation time-series causal analysis. In one example, as shown in a display screen 45 of Fig. 28, on the evaluator's profile screen, evaluation items that can be expected to have high reliability can be presented to the evaluation target person. The evaluation item that can be expected to have high reliability is, in one example, an evaluation item whose reliability of the evaluator exceeds a predetermined value. In addition, as shown in a display screen 47 of Fig. 28, an evaluation item 471 for which high reliability can be expected can be displayed at a higher position on the evaluation input screen. In addition, the evaluation item 471 for which high reliability can be expected can be emphatically displayed by coloring or the like. Moreover, the example of the display screen illustrated in Fig. 28 is used as an example of a display screen for feeding back the result of the evaluation time-series causal analysis, but the present embodiment is not limited thereto, and as described above, in the case where the reliability estimated by the evaluation analysis unit 205 exceeds a predetermined value, it can be used for feeding it back to the evaluator.

### (4-4. Automatic estimation of reliability)

Further, the evaluation visualization system according to the present embodiment implements the automatic estimation of the reliability by learning an estimation machine from the reliability and the sensing data. This makes it possible to estimate, in one example, the reliability of a user who has not evaluated another person.

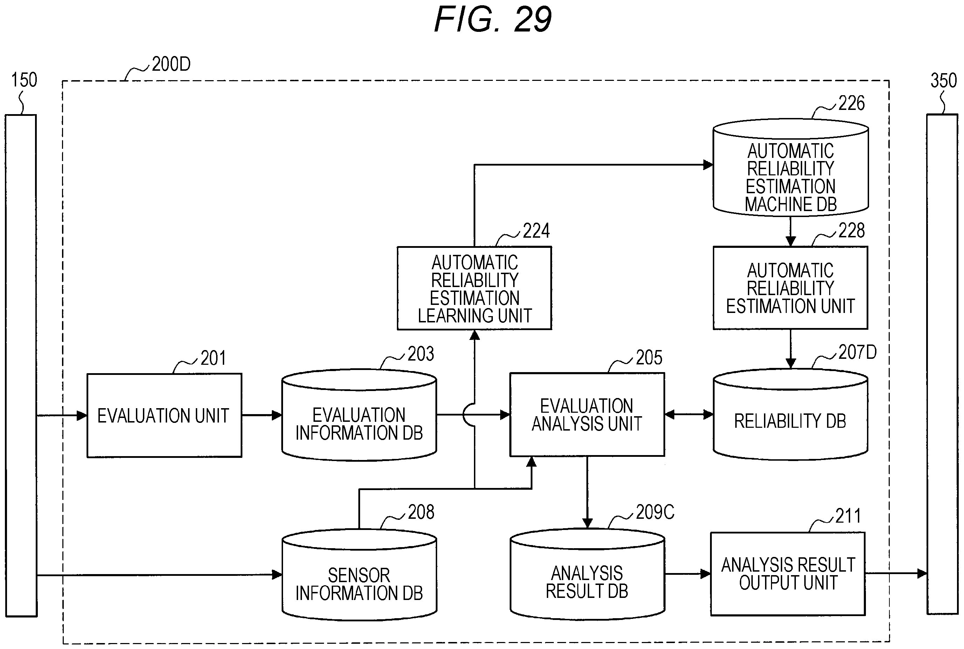

Fig. 29 is a block diagram illustrating a functional configuration example of a processing unit 200D that performs automatic reliability estimation. As illustrated in Fig. 29, the processing unit 200D includes the evaluation unit 201, the evaluation analysis unit 205, the analysis result output unit 211, an automatic reliability estimation learning unit 224, and an automatic reliability estimation unit 228. The functional configuration of each component is further described below. Moreover, the detailed description of the functional components denoted by the same reference numerals as those described with reference to Fig. 5 is omitted.

The automatic reliability estimation machine learning unit 224 acquires the evaluator's reliability Y from the reliability DB 207D and the evaluator's sensing data X from the sensor information DB 208, performs machine learning to estimate the reliability Y from the sensing data X, and generates an automatic reliability estimation machine Y = F(X). The automatic reliability estimation learning unit 224 stores the generated automatic reliability estimation machine in an automatic reliability estimation machine DB 226.

The automatic reliability estimation unit 228 acquires the sensing data X regarding the evaluator from the sensor information DB 208 and the automatic reliability estimation machine from the automatic reliability estimation machine DB 226, and automatically estimates the reliability of the evaluator. More specifically, the automatic reliability estimation unit 228 evaluates Y = F(X) and obtains the reliability Y of the evaluator. Then, the automatic reliability estimation unit 228 stores the obtained reliability Y in the reliability DB 207D. Moreover, a preset automatic estimation machine can be stored in the automatic reliability estimation machine DB 226.

### (5. System configuration)

An embodiment of the present disclosure is described above. As described above, the system 10 according to the present embodiment includes the input unit 100, the processing unit 200, and the output unit 300, and these components are implemented as one or a plurality of information processing apparatuses. An example of a combination of information processing apparatuses that implement the system 10 is now described by exemplifying a more specific example.

### (First example)

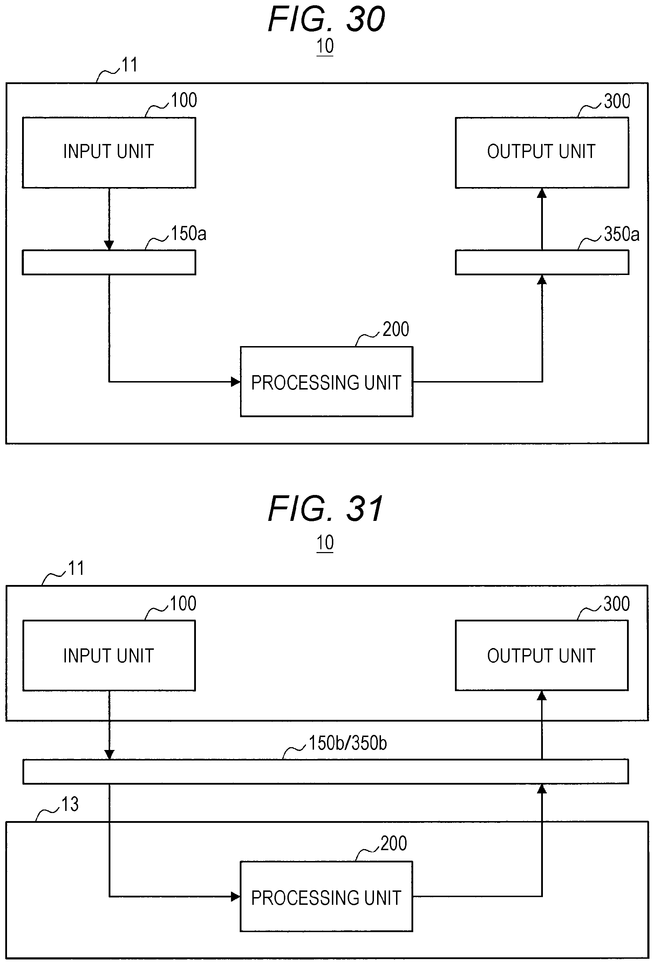

Fig. 30 is a block diagram illustrating a first example of a system configuration according to an embodiment of the present disclosure. Referring to Fig. 30, the system 10 includes an information processing apparatus 11. The input unit 100, the processing unit 200, and the output unit 300 are all implemented in the information processing apparatus 11. The information processing apparatus 11 can be a terminal device or a server as described below. In the first example, the information processing apparatus 11 can be a stand-alone device that does not communicate with an external device via a network to implement a function according to the embodiment of the present disclosure. Moreover, the information processing apparatus 11 can communicate with an external device for other functions, and thus may not necessarily be a stand-alone device. An interface 150a between the input unit 100 and the processing unit 200 and an interface 350a between the processing unit 200 and the output unit 300 can both be interfaces in the apparatus.

In the first example, the information processing apparatus 11 can be, in one example, a terminal device. In this case, the input unit 100 can include an input apparatus, a sensor, software used to acquire information from an external service, and the like. The software used to acquire information from an external service acquires data from, in one example, the application software of a service that is running on the terminal device. The processing unit 200 is implemented by a processor or a processing circuit, which is included in the terminal device, operating in accordance with a program stored in a memory or a storage device. The output unit 300 can include an output apparatus, a control apparatus, software used to provide the external service with information, and the like. The software used to provide the external service with information can provide, in one example, the application software of a service that is running on the terminal device with information.

Alternatively, in the first example, the information processing apparatus 11 can be a server. In this case, the input unit 100 can include software used to acquire information from an external service. The software used to acquire information from an external service acquires data from, in one example, a server of the external service (which can be the information processing apparatus 11 itself). The processing unit 200 is implemented by a processor, which is included in the terminal device, operating in accordance with a program stored in a memory or a storage device. The output unit 300 can include software used to provide the external service with information. The software used to provide the external service with information provides, in one example, a server of the external service (which can be the information processing apparatus 11 itself) with information.

### (Second example)

Fig. 31 is a block diagram illustrating a second example of a system configuration according to an embodiment of the present disclosure. Referring to Fig. 31, the system 10 includes information processing apparatuses 11 and 13. The input unit 100 and the output unit 300 are implemented in the information processing apparatus 11. On the other hand, the processing unit 200 is implemented in the information processing apparatus 13. The information processing apparatus 11 and the information processing apparatus 13 communicate with each other via a network to implement the function according to the embodiment of the present disclosure. An interface 150b between the input unit 100 and the processing unit 200 and an interface 350b between the processing unit 200 and the output unit 300 can both be communication interfaces between the apparatuses.

In the second example, the information processing apparatus 11 can be, in one example, a terminal device. In this case, the input unit 100 can include an input apparatus, a sensor, software used to acquire information from an external service, and the like, which is similar to the first example. The output unit 300 can include an output apparatus, a control apparatus, software used to provide the external service with information, and the like, which is also similar to the first example. Alternatively, the information processing apparatus 11 can be a server for exchanging information with the external service. In this case, the input unit 100 can include software used to acquire information from an external service. In addition, the output unit 300 can include the software used to provide the external service with information.

Further, in the second example, the information processing apparatus 13 can be a server or a terminal device. The processing unit 200 is implemented by a processor or a processing circuit, which is included in the information processing apparatus 13, operating in accordance with a program stored in a memory or a storage device. The information processing apparatus 13 can be, in one example, a device used dedicatedly as a server. In this case, the information processing apparatus 13 can be installed in a data center or the like, or can be installed in a home. Alternatively, the information processing apparatus 13 can be a device that can be used as a terminal device for other functions but does not implement the input unit 100 and the output unit 300 for the function according to the embodiment of the present disclosure. In the following example, the information processing apparatus 13 can be a server or a terminal device in the sense described above.

As an example, it is considered that a case where the information processing apparatus 11 is a wearable device and the information processing apparatus 13 is a mobile device connected to the wearable device via Bluetooth (registered trademark) or the like. In such a case where the wearable device receives an operation input by the user (the input unit 100), the mobile device executes processing on the basis of a request transmitted on the basis of the operation input (the processing unit 200), and outputs a processing result from the wearable device (the output unit 300), it can be said that the wearable device functions as the information processing apparatus 11 in the second example and the mobile device functions as the information processing apparatus 13.

### (Third example)

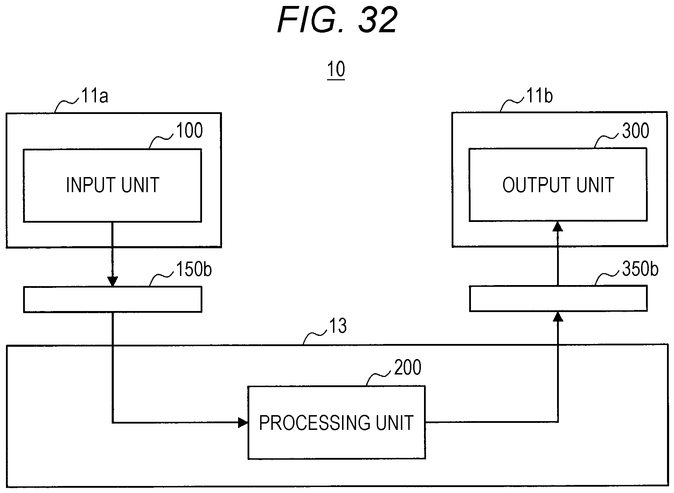

Fig. 32 is a block diagram illustrating a third example of a system configuration according to an embodiment of the present disclosure. Referring to Fig. 32, the system 10 includes information processing apparatuses 11a, 11b, and 13. The input unit 100 is implemented in the information processing apparatus 11a. The output unit 300 is implemented in the information processing apparatus 11b. In addition, the processing unit 200 is implemented in the information processing apparatus 13. The information processing apparatuses 11a and 11b and the information processing apparatus 13 communicate with each other via a network to implement the function according to the embodiment of the present disclosure. An interface 150b between the input unit 100 and the processing unit 200 and an interface 350b between the processing unit 200 and the output unit 300 can both be communication interfaces between the apparatuses. However, in the third example, the information processing apparatus 11a and the information processing apparatus 11b are separate devices, so the interfaces 150b and 350b can include different types of interfaces.

In the third example, the information processing apparatuses 11a and 11b can be, in one example, a terminal device. In this case, the input unit 100 can include an input apparatus, a sensor, software used to acquire information from an external service, and the like, which is similar to the first example. The output unit 300 can include an output apparatus, a control apparatus, software used to provide the external service with information, and the like, which is also similar to the first example. Alternatively, one or both of the information processing apparatuses 11a and 11b can be a server for acquiring information from an external service and providing the external service with information. In this case, the input unit 100 can include software used to acquire information from an external service. In addition, the output unit 300 can include the software used to provide the external service with information.

Further, in the third example, the information processing apparatus 13 can be a server or a terminal device, which is similar to the second example described above. The processing unit 200 is implemented by a processor or a processing circuit, which is included in the information processing apparatus 13, operating in accordance with a program stored in a memory or a storage device.

In the second example, the information processing apparatus 11a that implements the input unit 100 and the information processing apparatus 11b that implements the output unit 300 are separate devices. Thus, in one example, a function can be implemented in which a result of the processing based on an input obtained by the information processing apparatus 11a that is a terminal device held or used by a first user can be output from the information processing apparatus 11b that is a terminal device held or used by a second user different from the first user. In addition, a function can be implemented in which the result of the processing based on the input acquired by the information processing apparatus 11a that is a terminal device held or used by the first user can be output from the information processing apparatus 11b as a terminal device that is not at hand of the first user at that time (e.g., being installed at home in the absence). Alternatively, both the information processing apparatus 11a and the information processing apparatus 11b can be terminal devices held or used by the same user. In one example, in a case where the information processing apparatuses 11a and 11b are wearable devices mounted on different body parts of the user or are a combination of a wearable device and a mobile device, a function in which these devices are linked is provided to the user.

### (Fourth example)

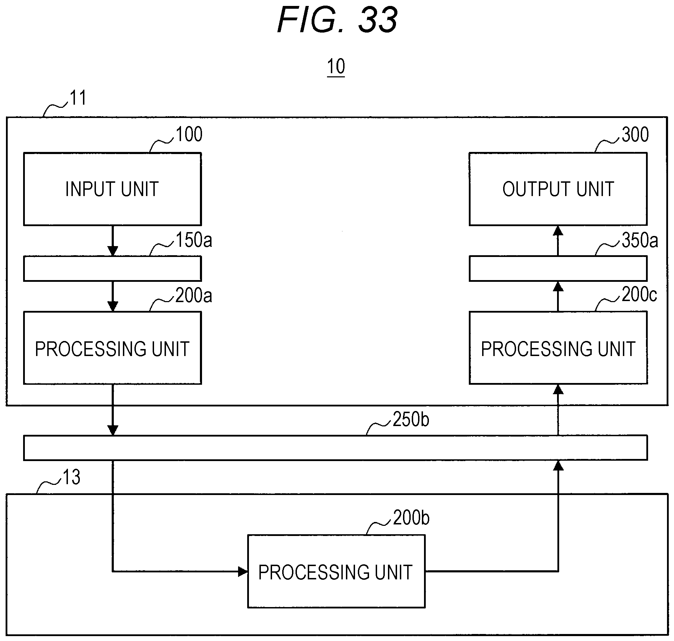

Fig. 33 is a block diagram illustrating a fourth example of a system configuration according to an embodiment of the present disclosure. Referring to Fig. 33, the system 10 includes information processing apparatuses 11 and 13. In the fourth example, the input unit 100 and the output unit 300 are implemented in the information processing apparatus 11. On the other hand, the processing unit 200 is implemented in a distributed manner to the information processing apparatus 11 and the information processing apparatus 13. The information processing apparatus 11 and the information processing apparatus 13 communicate with each other via a network to implement the function according to the embodiment of the present disclosure.

As described above, in the fourth example, the processing units 200 are implemented in a distributed manner between the information processing apparatuses 11 and 13. More specifically, the processing unit 200 includes processing units 200a and 200c implemented in the information processing apparatus 11, and a processing unit 200b implemented in the information processing apparatus 13. The processing unit 200a executes processing on the basis of information provided from the input unit 100 via the interface 150a and provides the processing unit 200b with a result of the processing. In this regard, it can be said that the processing unit 200a executes preprocessing. On the other hand, the processing unit 200c executes processing on the basis of the information provided from the processing unit 200b and provides the output unit 300 with a result of the processing via the interface 350a. In this regard, it can be said that the processing unit 200c performs post-processing.

Moreover, in the illustrated example, both the processing unit 200a that executes the pre-processing and the processing unit 200c that executes the post-processing are shown, but only one of them can be actually provided. In other words, the information processing apparatus 11 implements the processing unit 200a that executes the pre-processing, but it can provide the output unit 300 as it is with the information provided from the processing unit 200b without implementing the processing unit 200c that executes the post-processing. Similarly, the information processing apparatus 11 implements the processing unit 200c that executes the post-processing, but may not necessarily implement the processing unit 200a that executes the pre-processing.

An interface 250b is interposed between the processing unit 200a and the processing unit 200b and between the processing unit 200b and the processing unit 200c. The interface 250b is a communication interface between the apparatuses. On the other hand, in a case where the information processing apparatus 11 implements the processing unit 200a, the interface 150a is an interface in the apparatus. Similarly, in a case where the information processing apparatus 11 implements the processing unit 200c, the interface 350a is an interface in the apparatus.

Moreover, the fourth example described above is similar to the second example except that one or both of the processing unit 200a and the processing unit 200c are implemented by a processor or a processing circuit included in the information processing apparatus 11. In other words, the information processing apparatus 11 can be a terminal device or a server for exchanging information with an external service. In addition, the information processing apparatus 13 can be a server or a terminal device.

### (Fifth example)

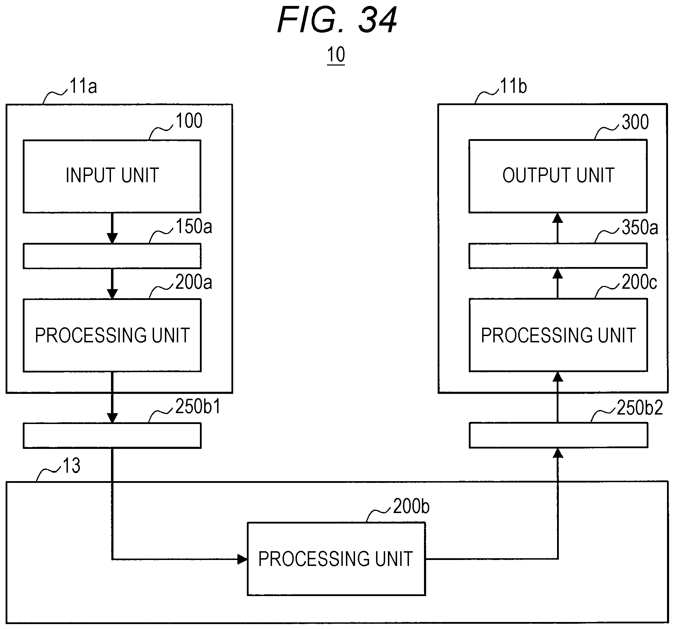

Fig. 34 is a block diagram illustrating a fifth example of a system configuration according to an embodiment of the present disclosure. Referring to Fig. 34, the system 10 includes information processing apparatuses 11a, 11b, and 13. The input unit 100 is implemented in the information processing apparatus 11a. The output unit 300 is implemented in the information processing apparatus 11b. In addition, the processing unit 200 is implemented in a distributed manner to the information processing apparatuses 11a and 11b, and the information processing apparatus 13. The information processing apparatuses 11a and 11b and the information processing apparatus 13 communicate with each other via a network to implement the function according to the embodiment of the present disclosure.

As illustrated, in the fifth example, the processing unit 200 is implemented in a distributed manner between the information processing apparatuses 11a and 11b and the information processing apparatus 13. More specifically, the processing unit 200 includes a processing unit 200a implemented in the information processing apparatus 11a, a processing unit 200b implemented in the information processing apparatus 13, and a processing unit 200c implemented in the information processing apparatus 11b. Such distribution of the processing unit 200 is similar to the fourth example described above. However, in the fifth example, the information processing apparatus 11a and the information processing apparatus 11b are separate devices, so interfaces 250b1 and 250b2 can include different types of interfaces.

Moreover, the fifth example described above is similar to the third example except that one or both of the processing unit 200a and the processing unit 200c are implemented by a processor or a processing circuit included in the information processing apparatus 11a or the information processing apparatus 11b. In other words, the information processing apparatuses 11a and 11b can be a terminal device or a server for exchanging information with an external service. In addition, the information processing apparatus 13 can be a server or a terminal device. In addition, in the following examples, a description of a processing unit in a terminal or a server having an input unit and an output unit is omitted, but in any of the examples, any one or all of the devices can have the processing unit.

### (Example of client-server system)

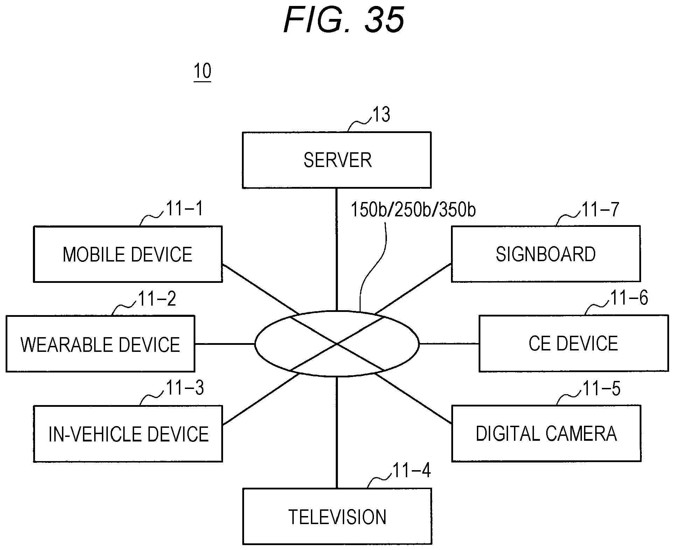

Fig. 35 is a diagram illustrating a client-server system as one of the more specific examples of a system configuration according to an embodiment of the present disclosure. In the illustrated example, the information processing apparatus 11 (or the information processing apparatuses 11a and 11b) is a terminal device, and the information processing apparatus 13 is a server.

As illustrated, examples of the terminal device include a mobile device 11-1, such as smartphones, tablets, or notebook personal computers (PCs), a wearable device 11-2 such as eyewear or contact lens-type terminals, wristwatch-type terminals, wristband-type terminals, ring-type terminals, headsets, clothing-attached or clothing-integrated terminals, shoe-attached or shoe-integrated terminals, or necklace-type terminals, an in-vehicle device 11-3 such as car navigation systems and rear-seat entertainment systems, a television 11-4, a digital camera 11-5, a consumer electronics (CE) device 11-6 such as recorders, game machines, air conditioners, refrigerators, washing machines, or desktop PCs, and a robot device, a device including a sensor attached in a facility, or a digital signboard (digital signage) 11-7 installed on the street. These information processing apparatuses 11 (terminal devices) communicate with information processing apparatus 13 (server) via a network. The network between the terminal device and the server corresponds to the interface 150b, the interface 250b, or the interface 350b in the above-described example. Furthermore, these apparatuses can operate individually in cooperation with each other, or a system in which all the apparatuses can cooperate can be constructed.

Moreover, the example illustrated in Fig. 35 is provided for the purpose of a better understanding of an example in which the system 10 is implemented in a client-server system, and the system 10 is not limited to such a client-server system as described in each of the above-described examples. In other words, in one example, both of the information processing apparatuses 11 and 13 can be terminal devices, or both of the information processing apparatuses 11 and 13 can be servers. In a case where the information processing apparatus 11 includes the information processing apparatuses 11a and 11b, one of the information processing apparatuses 11a and 11b can be a terminal device, and the other can be a server. In addition, in a case where the information processing apparatus 11 is a terminal device, examples of the terminal device are not limited to the terminal devices 11-1 to 11-7 described above, and can include other types of terminal devices.

### (Example of distributed system)

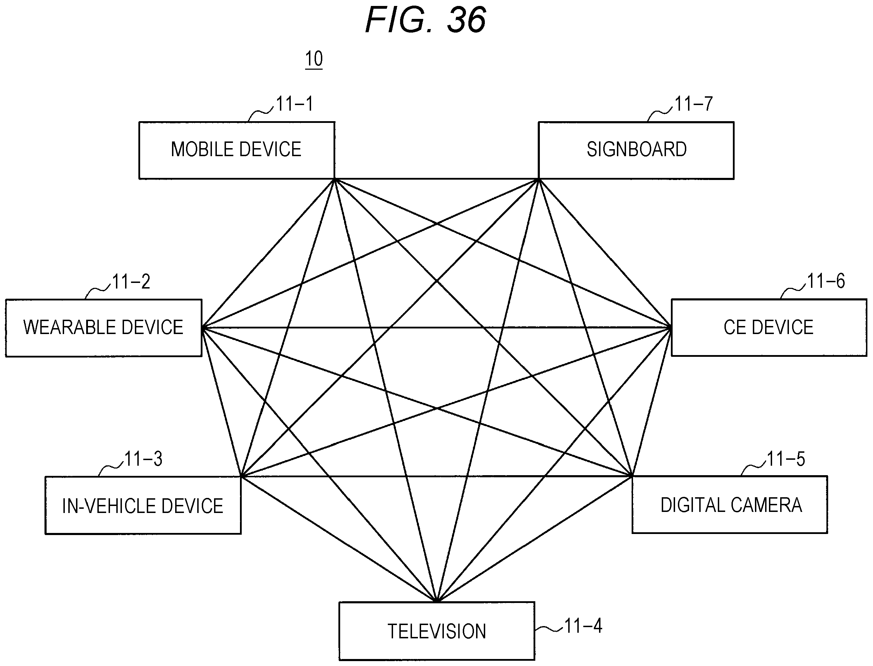

Another configuration example of the system 10 is described with reference to Fig. 36. Fig. 36 is a diagram illustrating a distributed system as one of other specific examples of the system configuration according to the embodiment of the present disclosure. In the illustrated example, the information processing apparatuses 11 (or information processing apparatuses 11a and 11b) are nodes, and these information processing apparatuses 11 are connected to each other via a network.

In the distributed system illustrated in Fig. 36, it is possible for the apparatuses to cooperate with each other individually, to perform distributed management of data, and to distribute processing. This makes it possible to reduce the processing load, improve real-time properties (improve response time or processing speed), and secure the security.

Further, the distributed system is also capable of performing machine learning in a distributed and cooperative manner, resulting in processing a large amount of data.

Further, in the distributed system illustrated in Fig. 36, it is also possible to monitor data with each other and secure its credibility without requiring a server in the centralized system. Specifically, in one example, it is possible to strictly maintain the validity (a so-called blockchain) by sharing the transaction information (ledger) by all the participants (each of the information processing apparatuses 11). In the blockchain, all the ledgers of all the participants are substantially impractical to falsify, so it is possible to ensure the credibility more reliably. In addition, in the case of falsifying data included in the past block in a blockchain, it is necessary to recalculate all hash values included in blocks subsequent to the block, so processing load is high and it is substantially impractical to perform it. Thus, it is possible to ensure credibility more reliably.

Further, in the blockchain, all participants share transaction information (distributed database) and the writing to the distributed database is performed by forming a specific consensus, so fraud by a specific participant is prevented, and fairness is maintained.

### (Sixth example)

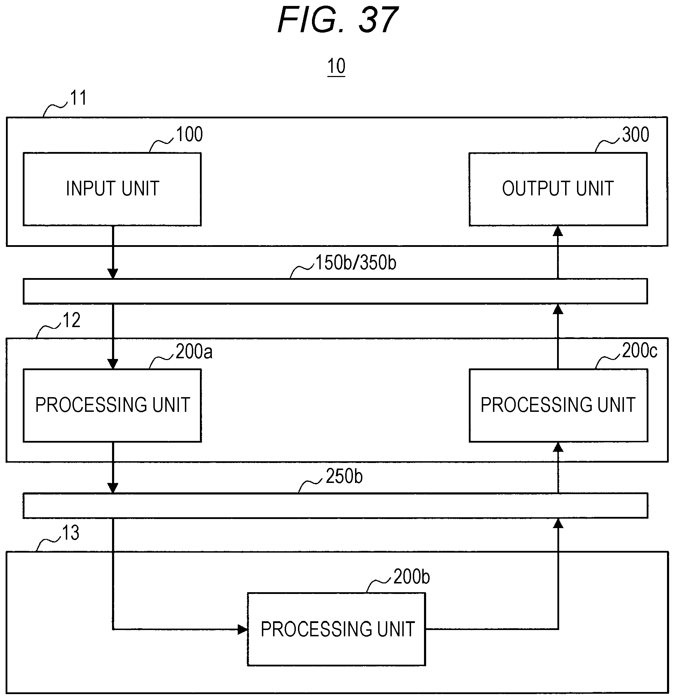

Fig. 37 is a block diagram illustrating a sixth example of the system configuration according to the embodiment of the present disclosure. Referring to Fig. 37, the system 10 includes information processing apparatuses 11, 12, and 13. The input unit 100 and the output unit 300 are implemented in the information processing apparatus 11. On the other hand, the processing unit 200 is implemented in a distributed manner to the information processing apparatus 12 and the information processing apparatus 13. The information processing apparatus 11 and the information processing apparatus 12, and the information processing apparatus 12 and the information processing apparatus 13 communicate with each other via a network to implement the function according to the embodiment of the present disclosure.

As described above, in the sixth example, the processing units 200 are implemented in a distributed manner between the information processing apparatuses 12 and 13. More specifically, processing units 200a and 200c implemented in the information processing apparatus 12, and a processing unit 200b implemented in the information processing apparatus 13 are included. The processing unit 200a executes processing on the basis of information provided from the input unit 100 via the interface 150b and provides the processing unit 200b with a result of the processing via the interface 250b. On the other hand, the processing unit 200c executes processing on the basis of the information provided from the processing unit 200b via the interface 250b and provides the output unit 300 with a result of the processing via the interface 350b. Moreover, in the illustrated example, both the processing unit 200a that executes the pre-processing and the processing unit 200c that executes the post-processing are shown, but only one of them can be actually provided.

In the sixth example, the information processing apparatus 12 is interposed between the information processing apparatus 11 and the information processing apparatus 13. More specifically, in one example, the information processing apparatus 12 can be a terminal device or a server interposed between the information processing apparatus 11 that is a terminal device and the information processing apparatus 13 that is a server. As an example in which the information processing apparatus 12 is a terminal device, there is a case where the information processing apparatus 11 is a wearable device, the information processing apparatus 12 is a mobile device connected to the wearable device by Bluetooth (registered trademark) or the like, and the information processing apparatus 13 is a server connected to the mobile device via the Internet. In addition, as an example in which the information processing apparatus 12 is a server, there is a case where the information processing apparatus 11 is various terminal devices, the information processing apparatus 12 is an intermediate server connected to the terminal devices via a network, and the information processing apparatus 13 is a server connected to the intermediate server via a network.

### (Seventh example)

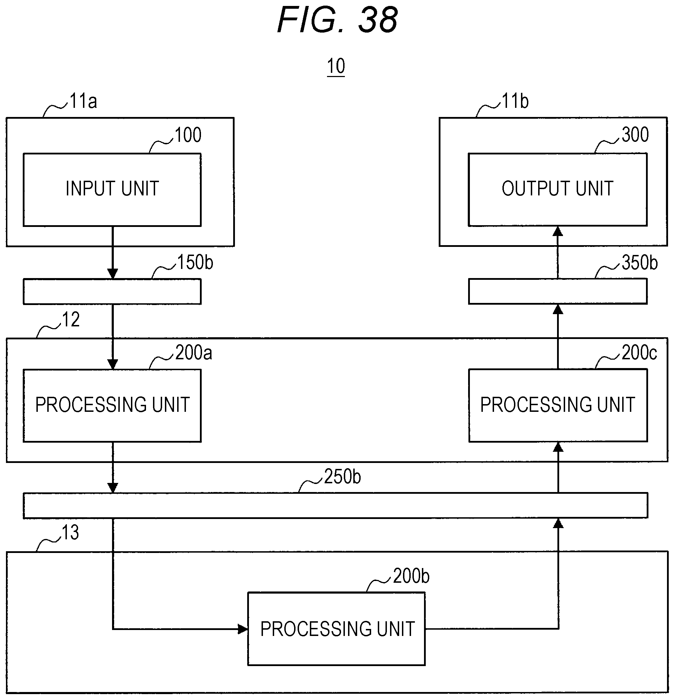

Fig. 38 is a block diagram illustrating a seventh example of the system configuration according to the embodiment of the present disclosure. Referring to Fig. 38, the system 10 includes information processing apparatuses 11a, 11b, 12, and 13. In the illustrated example, the input unit 100 is implemented in the information processing apparatus 11a. The output unit 300 is implemented in the information processing apparatus 11b. On the other hand, the processing unit 200 is implemented in a distributed manner to the information processing apparatus 12 and the information processing apparatus 13. The information processing apparatuses 11a and 11b and the information processing apparatus 12, and the information processing apparatus 12 and the information processing apparatus 13 communicate with each other via a network to implement the function according to the embodiment of the present disclosure.

The seventh example is an example in which the third example and the sixth example described above are combined. In other words, in the seventh example, the information processing apparatus 11a that implements the input unit 100 and the information processing apparatus 11b that implements the output unit 300 are separate devices. More specifically, the seventh example includes a case where the information processing apparatuses 11a and 11b are wearable devices that are attached to different parts of the user, the information processing apparatus 12 is connected to these wearable devices by Bluetooth (registered trademark) or the like, and the information processing apparatus 13 is a server connected to the mobile device via the Internet. In addition, the seventh example also includes a case where the information processing apparatuses 11a and 11b are a plurality of terminal devices (can be held or used by the same user or can be held or used by different users), the information processing apparatus 12 is an intermediate server connected to each terminal device via a network, and the information processing apparatus 13 is a server connected to the intermediate server via a network.

### (Eighth example)

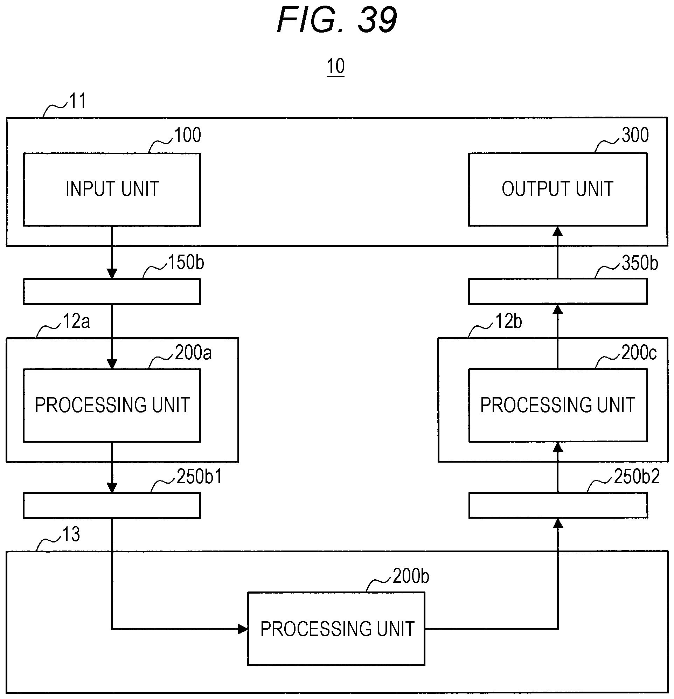

Fig. 39 is a block diagram illustrating an eighth example of the system configuration according to the embodiment of the present disclosure. Referring to Fig. 39, the system 10 includes information processing apparatuses 11, 12a, 12b, and 13. The input unit 100 and the output unit 300 are implemented in the information processing apparatus 11. On the other hand, the processing unit 200 is implemented in a distributed manner to the information processing apparatuses 12a and 12b, and the information processing apparatus 13. The information processing apparatus 11 and the information processing apparatuses 12a and 12b, and the information processing apparatuses 12a and 12b and the information processing apparatus 13 communicate with each other via a network to implement the function according to the embodiment of the present disclosure.

In the eighth example, the processing unit 200a that executes the pre-processing and the processing unit 200c that executes the post-processing in the sixth example described above are implemented as separate information processing apparatuses 12a and 12b, respectively. Thus, the information processing apparatus 11 and the information processing apparatus 13 are similar to those of the sixth example. In addition, each of the information processing apparatuses 12a and 12b can be a server or a terminal device. In one example, in a case where the information processing apparatuses 12a and 12b are both servers, it can be said that, in the system 10, the processing unit 200 is implemented by being distributed to three servers (the information processing apparatuses 12a, 12b, and 13). Moreover, the number of servers that implement the processing unit 200 in a distributed manner is not limited to three, and can be two or four or more. Examples thereof can be understood from, in one example, the eighth example or a ninth example described below, so illustration thereof is omitted.

### (Ninth example)

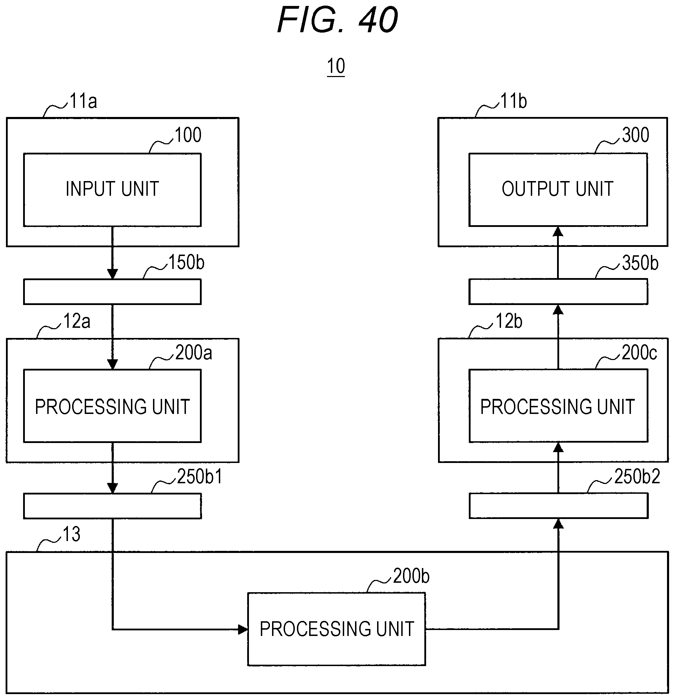

Fig. 40 is a block diagram illustrating a ninth example of the system configuration according to the embodiment of the present disclosure. Referring to Fig. 40, the system 10 includes information processing apparatuses 11a, 11b, 12a, 12b, and 13. In the ninth example, the input unit 100 is implemented in the information processing apparatus 11a. The output unit 300 is implemented in the information processing apparatus 11b. On the other hand, the processing unit 200 is implemented in a distributed manner to the information processing apparatuses 12a and 12b, and the information processing apparatus 13. The information processing apparatus 11a and the information processing apparatus 12a, the information processing apparatus 11b and the information processing apparatus 12b, and the information processing apparatuses 12a and 12b and the information processing apparatus 13 communicate with each other via a network to implement the function according to the embodiment of the present disclosure.

The ninth example is an example in which the seventh example and the eighth example described above are combined. In other words, in the ninth example, the information processing apparatus 11a that implements the input unit 100 and the information processing apparatus 11b that implements the output unit 300 are separate devices. The information processing apparatuses 11a and 11b communicate with their respective separate intermediate nodes (information processing apparatuses 12a and 12b). Thus, in the ninth example, it is possible to implement the function according to the embodiment of the present disclosure by implementing the processing unit 200 in a distributed manner on three servers (information processing apparatuses 12a, 12b, and 13), which is similar to the eighth example and by using the information processing apparatuses 11a and 11b that can be terminal devices held or used by the same user or different users.

### (Example of system including intermediate server)

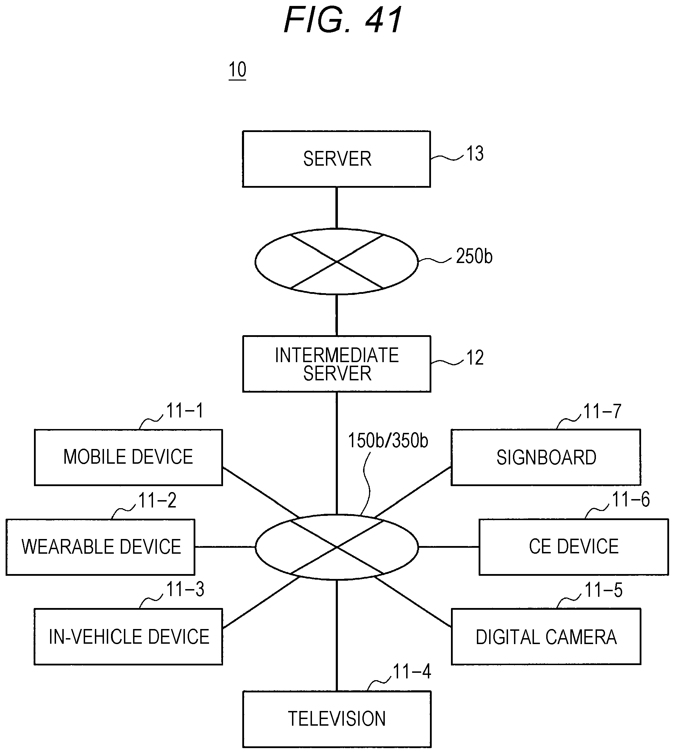

Fig. 41 is a diagram illustrating an example of a system including an intermediate server as a more specific example of the system configuration according to the embodiment of the present disclosure. In the illustrated example, the information processing apparatus 11 (or the information processing apparatuses 11a and 11b) is a terminal device, and the information processing apparatus 12 is an intermediate server, and the information processing apparatus 13 is a server.

As in the example described above with reference to Fig. 35, the terminal devices can include a mobile device 11-1, a wearable device 11-2, an in-vehicle device 11-3, a television 11-4, a digital camera 11-5, and a CE device 11-6, a robot device, a signboard 11-7, or the like. These information processing apparatuses 11 (terminal devices) communicate with the information processing apparatus 12 (intermediate server) via a network. The network between the terminal devices and the intermediate server corresponds to the interfaces 150b and 350b in the above-described example. In addition, the information processing apparatus 12 (intermediate server) communicates with the information processing apparatus 13 (server) via a network. The network between the intermediate server and the server corresponds to the interface 250b in the above-described example.

Moreover, the example illustrated in Fig. 41 is provided for the purpose of a better understanding of an example in which the system 10 is implemented in a system including an intermediate server, and the system 10 is not limited to such a system as described in each of the above-described examples.

### (Example of system including terminal device functioning as host)

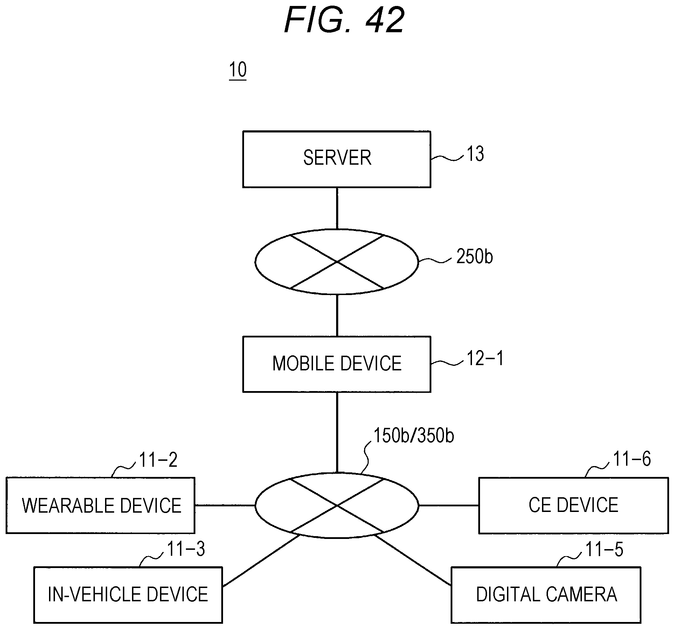

Fig. 42 is a diagram illustrating an example of a system including a terminal device functioning as a host as a more specific example of the system configuration according to the embodiment of the present disclosure. In the illustrated example, the information processing apparatus 11 (or the information processing apparatuses 11a and 11b) is a terminal device, and the information processing apparatus 12 is a terminal device functioning as a host, and the information processing apparatus 13 is a server.

In the illustrated example, the terminal device includes, in one example, a wearable device 11-2, an in-vehicle device 11-3, a digital camera 11-5, a robot device, a device including a sensor attached to a facility, and a CE device 11-6. These information processing apparatuses 11 (terminal devices) communicate with the information processing apparatus 12, in one example, via a network such as Bluetooth (registered trademark) or Wi-Fi. In the figure, a mobile device 12-1 is illustrated as a terminal device functioning as a host. The network between the terminal device and the mobile device corresponds to the interfaces 150b and 350b in the above-described example. The information processing apparatus 12 (mobile device) communicates with the information processing apparatus 13 (server), in one example, via a network such as the Internet. The network between the mobile device and the server corresponds to the interface 250b in the above-described example.

Moreover, the example illustrated in Fig. 42 is provided for the purpose of a better understanding of an example implemented in a system including a terminal device in which the system 10 functions as a host, and the system 10 is not limited to such a system as described in each of the above-described examples. In addition, the terminal device functioning as a host is not limited to the mobile device 12-1 in the illustrated example, and various terminal devices having appropriate communication functions and processing functions can function as hosts. In addition, the wearable device 11-2, the in-vehicle device 11-3, the digital camera 11-5, and the CE device 11-6 illustrated as examples of the terminal device do not exclude terminal devices other than these devices from the relevant example, and it merely shows an example of a typical terminal device that can be the information processing apparatus 11 in the case where the information processing apparatus 12 is the mobile device 12-1.

### (Example of system including edge server)

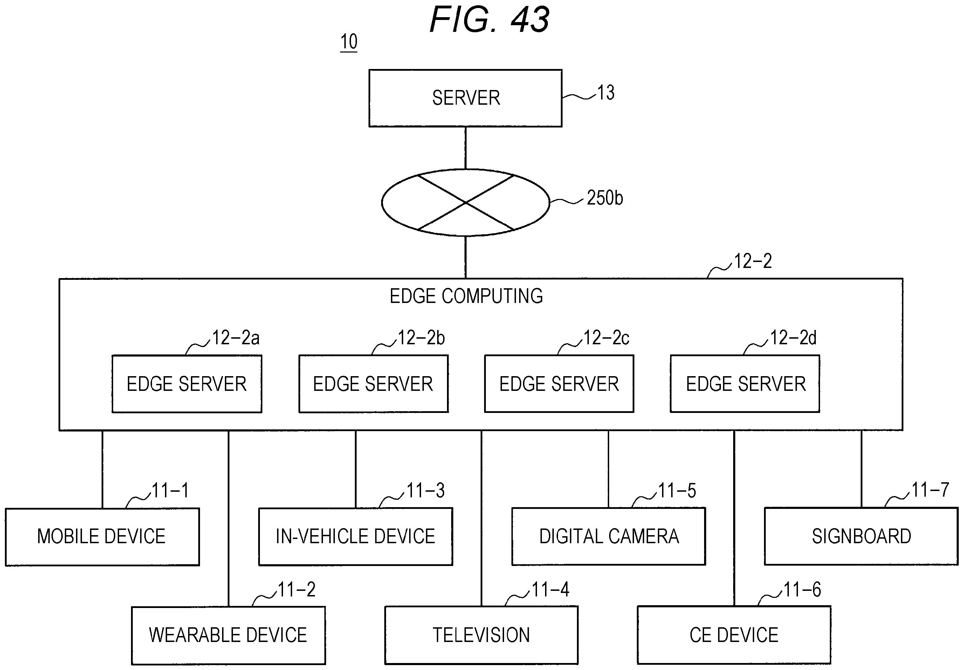

Fig. 43 is a diagram illustrating an example of a system including an edge server as a more specific example of the system configuration according to the embodiment of the present disclosure. In the illustrated example, the information processing apparatus 11 (or the information processing apparatuses 11a and 11b) is a terminal device, and the information processing apparatus 12 is an edge server, and the information processing apparatus 13 is a server.

As in the example described above with reference to Fig. 35, the terminal devices can include a mobile device 11-1, a wearable device 11-2, an in-vehicle device 11-3, a television 11-4, a digital camera 11-5, and a CE device 11-6, a robot device, a signboard 11-7, or the like. These information processing apparatuses 11 (terminal devices) communicate with the information processing apparatus 12 (the edge server 12-2) via a network. The network between the terminal devices and the edge server corresponds to the interfaces 150b and 350b in the above-described example. In addition, the information processing apparatus 12 (edge server) communicates with the information processing apparatus 13 (server) via a network, for example, an internet. The network between the edge server and the server corresponds to the interface 250b in the above-described example.

In the example illustrated in Fig. 43, the edge server 12-2 (e.g., edge servers 12-2a to 12-2d) is distributed closer to the terminal device (the information processing apparatus 11) than the server 13, thereby achieving the reduction of communication delay, the high-speed processing, and the improvement of real-time performance.

Moreover, the example illustrated in Fig. 43 is provided for the purpose of a better understanding of an example in which the system 10 is implemented in a system including an edge server, and the system 10 is not limited to such a system as described in each of the above-described examples.

### (Example of system including fog computing)

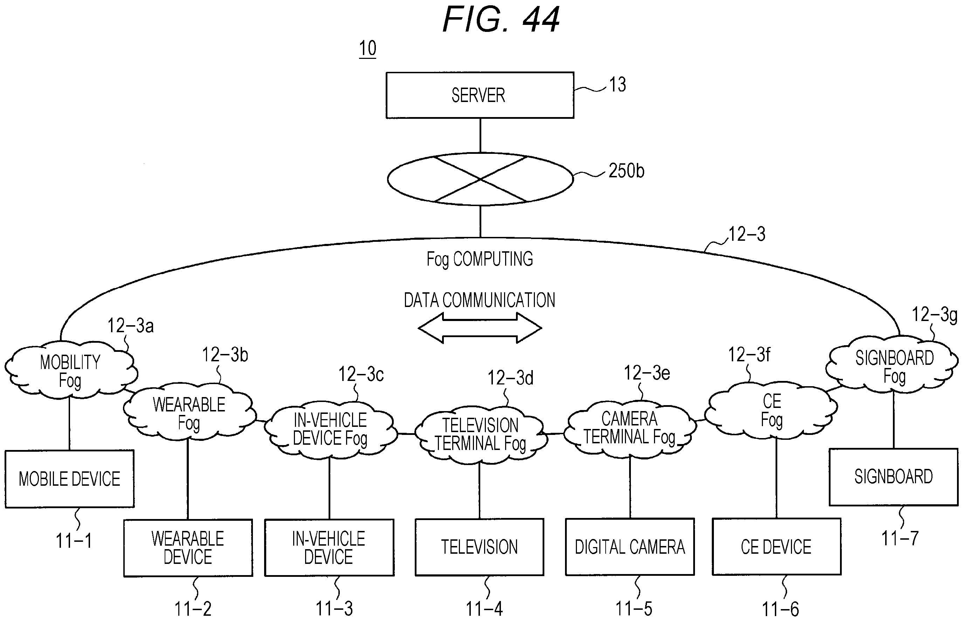

Fig. 44 is a diagram illustrating an example of a system including a fog computing as a more specific example of the system configuration according to the embodiment of the present disclosure. In the illustrated example, the information processing apparatus 11 (or the information processing apparatuses 11a and 11b) is a terminal device, and the information processing apparatus 12 is a fog computing, and the information processing apparatus 13 is a server.

As in the example described above with reference to Fig. 35, the terminal devices can include a mobile device 11-1, a wearable device 11-2, an in-vehicle device 11-3, a television 11-4, a digital camera 11-5, and a CE device 11-6, a robot device, a signboard 11-7, or the like. These information processing apparatuses 11 (terminal devices) communicate with the information processing apparatus 12 (the fog computing 12-3) via a network. The network between the terminal devices and the fog computing corresponds to the interfaces 150b and 350b in the above-described example. In addition, the information processing apparatus 12 (fog computing) communicates with the information processing apparatus 13 (server) via a network, for example, an internet. The network between the fog computing and the server corresponds to the interface 250b in the above-described example.

The fog computing 12-3 is a distributed processing environment between the cloud and the device, and is widely distributed at a position closer to the device (the information processing apparatus 11) than the cloud (the server 13). Specifically, the fog computing 12-3 has a system configuration including edge computing by a mechanism for distributing computing resources for processing by field or region and for optimally allocating them.

In the example illustrated in Fig. 44, as an example, there are assumed, as the fog computing 12-3, a mobility fog 12-3a that performs data management and processing of the mobile terminal 11-1, a wearable fog 12-3b that performs data management and processing of the wearable device 11-2, an in-vehicle device fog 12-3c that performs data management and processing of the in-vehicle device 11-3, a television terminal fog 12-3d that performs data management and processing of the television 11-4, a camera terminal fog 12-3e that performs data management and processing of the digital camera 11-5, a CE fog 12-3f that performs data management and processing of the CE device 11-6, and 12-3g that performs data management and processing of the signboard 11-7. The data distribution between fogs can also be performed.

In fog computing, computing resources can be distributed at a location close to the device and various processing such as data management, accumulation, or conversion can be performed, thereby achieving the reduction of communication delay, the high-speed processing, and the improvement of real-time performance.

Moreover, the example illustrated in Fig. 44 is provided for the purpose of a better understanding of an example in which the system 10 is implemented in a system including a fog computing, and the system 10 is not limited to such a system as described in each of the above-described examples.

### (Tenth example)

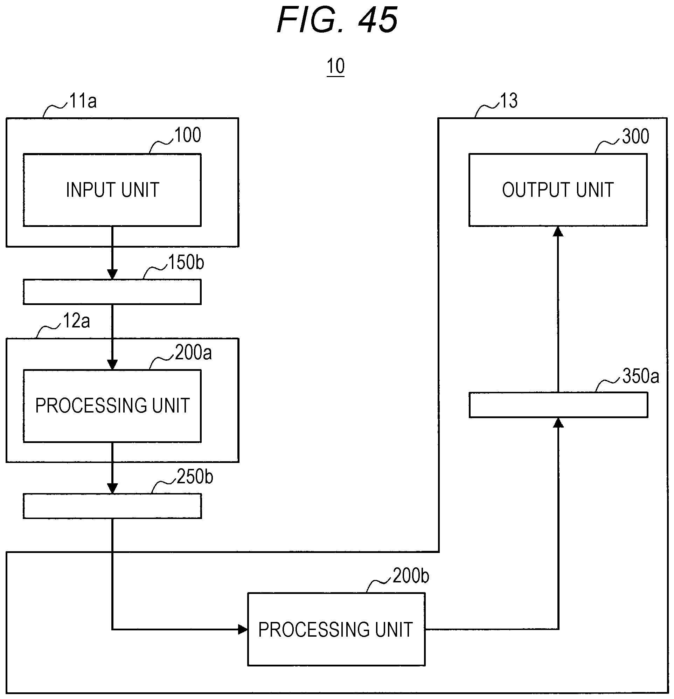

Fig. 45 is a block diagram illustrating a tenth example of the system configuration according to the embodiment of the present disclosure. Referring to Fig. 45, the system 10 includes information processing apparatuses 11a, 12a, and 13. In the tenth example, the input unit 100 is implemented in the information processing apparatus 11a. In addition, the processing unit 200 is implemented in a distributed manner to the information processing apparatus 12a and the information processing apparatus 13. The output unit 300 is implemented in the information processing apparatus 13. The information processing apparatus 11a and the information processing apparatus 12a, and the information processing apparatus 12a and the information processing apparatus 13 communicate with each other via a network to implement the function according to the embodiment of the present disclosure.

The tenth example is an example in which the information processing apparatuses 11b and 12b are incorporated into the information processing apparatus 13 in the ninth example described above. In other words, in the tenth example, the information processing apparatus 11a that implements the input unit 100 and the information processing apparatus 12a that implements the processing unit 200a are independent devices, but the processing unit 200b and the output unit 300 are implemented by the same information processing apparatus 13.

According to the tenth example, in one example, a configuration is implemented in which the information acquired by the input unit 100 in the information processing apparatus 11a that is a terminal device is processed by the processing unit 200a in the information processing apparatus 12a that is an intermediate terminal device or server, is provided to the information processing apparatus 13 that is a server or a terminal, and is processed by the processing unit 200b, then is output from the output unit 300. Moreover, the intermediate processing by the information processing apparatus 12a can be omitted. Such a configuration can employ, in one example, a service that executes predetermined processing in the server or the terminal 13 on the basis of information provided from the terminal device 11a, and then accumulates or outputs the processing result in the server or the terminal 13. The accumulated processing result can be used, in one example, by another service.

### (Eleventh example)

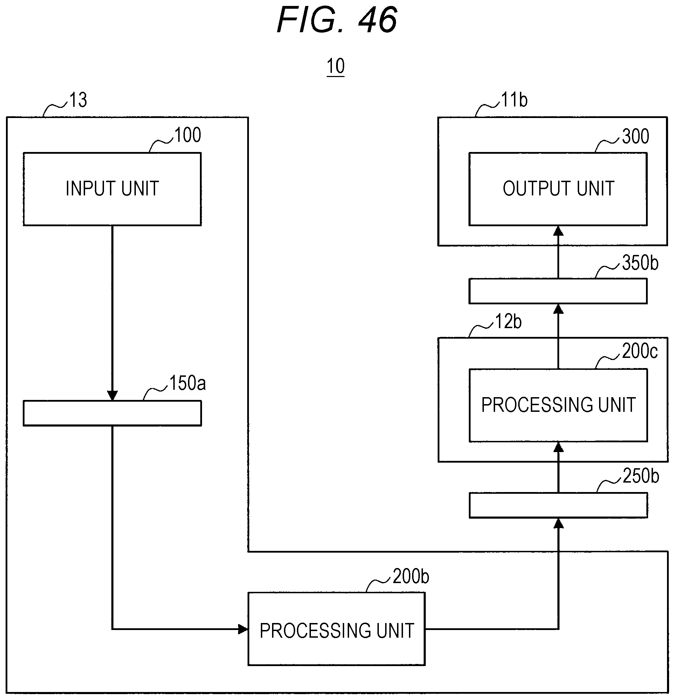

Fig. 46 is a block diagram illustrating an eleventh example of the system configuration according to the embodiment of the present disclosure. Referring to Fig. 46, the system 10 includes information processing apparatuses 11b, 12b, and 13. In the eleventh example, the input unit 100 is implemented in the information processing apparatus 13. In addition, the processing unit 200 is implemented in a distributed manner to the information processing apparatus 13 and the information processing apparatus 12b. The output unit 300 is implemented in the information processing apparatus 11b. The information processing apparatus 13 and the information processing apparatus 12b, and the information processing apparatus 12b and the information processing apparatus 11b communicate with each other via a network to implement the function according to the embodiment of the present disclosure.

The eleventh example is an example in which the information processing apparatuses 11a and 12a are incorporated into the information processing apparatus 13 in the ninth example described above. In other words, in the eleventh example, the information processing apparatus 11b that implements the output unit 300 and the information processing apparatus 12b that implements the processing unit 200c are independent devices, but the input unit 100 and the processing unit 200b are implemented by the same information processing apparatus 13.

According to the eleventh example, in one example, a configuration is implemented in which the information acquired by the input unit 100 in the information processing apparatus 13 that is a server or a terminal device is processed by the processing unit 200b, is provided to the information processing apparatus 12b that is an intermediate terminal device or a server, then is processed by the processing unit 200c, and then output from the output unit 300 in the information processing apparatus 11b that is a terminal device. Moreover, the intermediate processing by the information processing apparatus 12b can be omitted. Such a configuration can be employed, in one example, in a service in which predetermined processing is executed in the server or the terminal 13 on the basis of information acquired in the server or the terminal 13 and the processing result is provided to the terminal device 11b. The acquired information can be provided, in one example, by another service.

### (6. Hardware configuration)

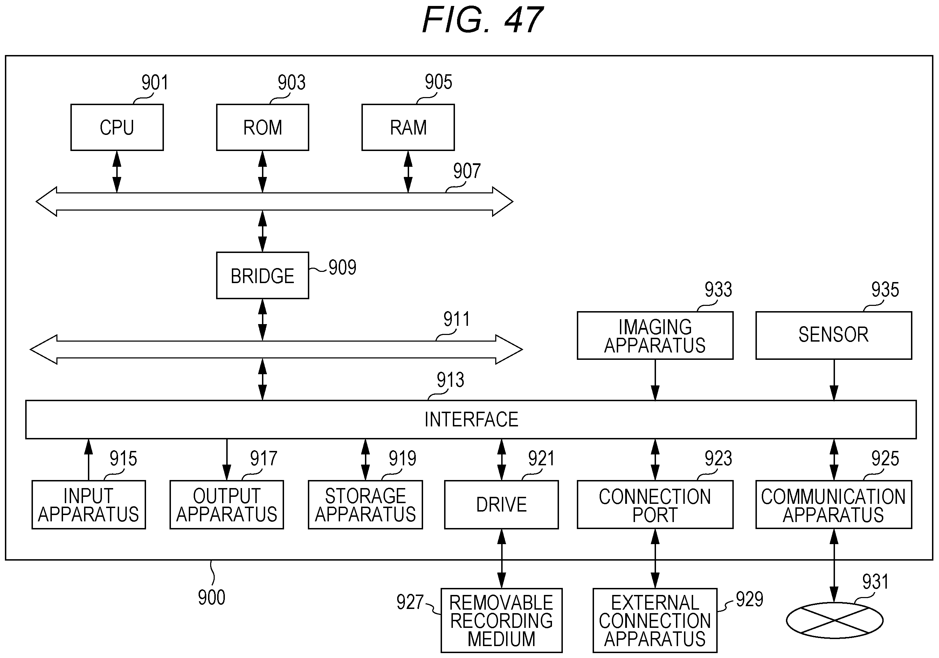

Next, with reference to Fig. 47, a hardware configuration of an information processing apparatus according to an embodiment of the present disclosure is explained. Fig. 47 is a block diagram illustrating a hardware configuration example of an information processing apparatus according to the embodiment of the present disclosure.

The information processing apparatus 900 includes a central processing unit (CPU) 901, read only memory (ROM) 903, and random access memory (RAM) 905. In addition, the information processing apparatus 900 may include a host bus 907, a bridge 909, an external bus 911, an interface 913, an input apparatus 915, an output apparatus 917, a storage apparatus 919, a drive 921, a connection port 923, and a communication apparatus 925. Moreover, the information processing apparatus 900 may include an imaging apparatus 933, and a sensor 935, as necessary. The information processing apparatus 900 may include a processing circuit such as a digital signal processor (DSP), an application-specific integrated circuit (ASIC), or a field-programmable gate array (FPGA), alternatively or in addition to the CPU 901.

The CPU 901 serves as an arithmetic processing apparatus and a control apparatus, and controls the overall operation or a part of the operation of the information processing apparatus 900 according to various programs recorded in the ROM 903, the RAM 905, the storage apparatus 919, or a removable recording medium 927. The ROM 903 stores programs, operation parameters, and the like used by the CPU 901. The RAM 905 transiently stores programs used in execution by the CPU 901, and various parameters and the like that change as appropriate when executing such programs. The CPU 901, the ROM 903, and the RAM 905 are connected with each other via the host bus 907 configured from an internal bus such as a CPU bus. Further, the host bus 907 is connected to the external bus 911 such as a peripheral component interconnect/interface (PCI) bus via the bridge 909.

The input apparatus 915 is a device operated by a user such as a mouse, a keyboard, a touch panel, a button, a switch, and a lever, for example. The input apparatus 915 may be a remote control device that uses, for example, infrared radiation and another type of radio wave. Alternatively, the input apparatus 915 may be an external connection apparatus 929 such as a mobile phone that corresponds to an operation of the information processing apparatus 900. The input apparatus 915 includes an input control circuit that generates input signals on the basis of information which is input by a user to output the generated input signals to the CPU 901. A user inputs various types of data to the information processing apparatus 900 and instructs the information processing apparatus 900 to perform a processing operation by operating the input apparatus 915.

The output apparatus 917 includes an apparatus that can report acquired information to a user visually, audibly, haptically, or the like. The output apparatus 917 may be, for example, a display device such as a liquid crystal display (LCD) or an organic electroluminescence (EL) display, an audio output apparatus such as a speaker or a headphone, a vibrator, or the like. The output apparatus 917 outputs a result obtained through a process performed by the information processing apparatus 900, in the form of video such as text and an image, sounds such as voice and audio sounds, vibration, or the like.

The storage apparatus 919 is an apparatus for data storage that is an example of a storage unit of the information processing apparatus 900. The storage apparatus 919 includes, for example, a magnetic storage unit device such as a hard disk drive (HDD), a semiconductor storage device, an optical storage device, a magneto-optical storage device, or the like. The storage apparatus 919 stores therein various data and the programs executed by the CPU 901, for example, various data acquired from an outside, and the like.

The drive 921 is a reader/writer for the removable recording medium 927 such as a magnetic disk, an optical disc, a magneto-optical disk, and a semiconductor memory, and built in or externally attached to the information processing apparatus 900. The drive 921 reads out information recorded on the mounted removable recording medium 927, and outputs the information to the RAM 905. Further, the drive 921 writes the record into the mounted removable recording medium 927.

The connection port 923 is a port used to connect devices to the information processing apparatus 900. The connection port 923 may be, for example, a universal serial bus (USB) port, an IEEE1394 port, a small computer system interface (SCSI) port, or the like. Further, the connection port 923 may be an RS-232C port, an optical audio terminal, a high-definition multimedia interface (HDMI) (registered trademark) port, or the like. The connection of the external connection apparatus 929 to the connection port 923 makes it possible to exchange various data between the information processing apparatus 900 and the external connection apparatus 929.

The communication apparatus 925 is a communication interface including, for example, a communication device for connection to a communication network 931. The communication apparatus 925 may be, for example, a communication card or the like for a local area network (LAN), Bluetooth (registered trademark), Wi-Fi, or a wireless USB (WUSB). Further, the communication apparatus 925 may also be a router for optical communication, a router for asymmetric digital subscriber line (ADSL), a modem for various types of communication, or the like. For example, the communication apparatus 925 transmits and receives signals or the like in the Internet or transmits and receives signals or the like to and from another communication device by using a predetermined protocol such as TCP/IP. Further, the communication network 931 connected to the communication apparatus 925 is a network established through wired or wireless connection. The communication network 931 may include, for example, the Internet, a home LAN, infrared communication, radio communication, satellite communication, or the like.

The imaging apparatus 933 is, for example, an apparatus that captures an image of a real space by using an image sensor such as a complementary metal oxide semiconductor (CMOS) or a charge coupled device (CCD), and various members such as a lens for controlling image formation of a subject image onto the image sensor, and generates the captured image. The imaging apparatus 933 may capture a still image or a moving image.

The sensor 935 is, for example, various sensors such as an acceleration sensor, an angular velocity sensor, a geomagnetic sensor, an illuminance sensor, a temperature sensor, a barometric sensor, and a sound sensor (microphone). The sensor 935 acquires information regarding a state of the information processing apparatus 900 such as an attitude of a housing of the information processing apparatus 900, and information regarding an environment surrounding the information processing apparatus 900 such as luminous intensity and noise around the information processing apparatus 900. Further, the sensor 935 may include a global positioning system (GPS) receiver that receives GPS signals to measure latitude, longitude, and altitude of the apparatus.

The example of the hardware configuration of the information processing apparatus 900 has been described. Each of the structural elements described above may include a general purpose component or may include hardware specialized for the function of each of the structural elements. The configuration may be changed as necessary in accordance with the state of the art at the time of working of the present disclosure.

### (7. Supplement)

Embodiments of the present disclosure can be applied to, in one example, the information processing apparatus as described above, a system, an information processing method executed in an information processing apparatus or a system, a program for causing an information processing apparatus to function, and a non-transitory tangible medium having the program recorded thereon.

Further, the information processing system according to the present embodiment mainly targets evaluation between users, that is, evaluation of a person viewed from a person. However, the evaluation target is not limited to a person and can be an object, content, organization, a place, or the like. In addition, in this case, the evaluation information of a person who has a high degree of reliability in each field (above-mentioned person having an eye) can be reflected more strongly in the evaluation value.

The preferred embodiment(s) of the present disclosure has/have been described above with reference to the accompanying drawings, whilst the present technology is not limited to the above examples. A person skilled in the art may find various alterations and modifications within the scope of the appended claims, and it should be understood that they will naturally come under the technical scope of the present disclosure.

In one example, a computer program for causing the hardware such as the CPU, the ROM, and the RAM incorporated in the input unit 100, the processing unit 200, or the output unit 300 described above to execute the functions of the input unit 100, the processing unit 200, or the output unit 300 is capable of being created. In addition, a non-transitory tangible computer-readable recording medium that stores the relevant computer program is provided.

Further, the effects described in this specification are merely illustrative or exemplified effects and are not necessarily limitative. That is, with or in the place of the above effects, the technology according to the present disclosure may achieve other effects that are clear to those skilled in the art on the basis of the description of this specification.

Additionally, the present technology may also be configured as below.
(1) An information processing apparatus including: a control unit configured to perform
   processing of acquiring evaluation information for an evaluation target person by an evaluator and sensing data of the evaluation target person, and
   processing of estimating reliability of evaluation by the evaluator on the basis of the evaluation information for the evaluation target person by the evaluator and the sensing data of the evaluation target person.
(2) The information processing apparatus according to (1), in which the control unit estimates the reliability depending on a degree of matching between results obtained by processing the evaluation information and the sensing data.
(3) The information processing apparatus according to (1) or (2), in which the control unit performs control to notify the evaluator of information indicating the reliability.
(4) The information processing apparatus according to (3), in which the control unit performs control to
   generate a screen including the information indicating the reliability, and
   transmit the generated screen to the evaluator.
(5) The information processing apparatus according to (1) or (2), in which
   the control unit performs control to
   estimate the reliability for each of evaluation items,
   generate an evaluation input screen in which the evaluation items are arranged depending on a degree of the reliability, and transmit the generated evaluation input screen to the evaluator.
(6) The information processing apparatus according to any one of (1) to (5), in which the control unit estimates the reliability on the basis of sensing data of the evaluator.
(7) The information processing apparatus according to (6), in which
   the control unit
   performs estimation processing of the reliability based on the sensing data of the evaluator using machine-learned information generated on the basis of accumulated sensing data of a plurality of evaluators and each degree of reliability of the plurality of evaluators.
(8) The information processing apparatus according to any one of (1) to (7), in which
   the control unit
   compares the evaluation information of the evaluator with an evaluation value of an analysis result of accumulated evaluation information of a plurality of evaluators, and
   estimates the reliability of the evaluator on the basis of a result obtained by the comparison.
(9) The information processing apparatus according to any one of (1) to (8), in which
   the control unit performs control to
   compare a time-series change of an evaluation value of an analysis result of accumulated evaluation information of a plurality of evaluators with the evaluation information of the evaluator, and
   feed a fact that the reliability of the evaluator is high back to the evaluator in a case where the evaluation value approximates the evaluation information by the evaluator.
(10) The information processing apparatus according to any one of (1) to (9), in which
   the control unit
   analyzes accumulated evaluation information for the evaluation target person by a plurality of evaluators, and calculates an evaluation value of the evaluation target person.
(11) The information processing apparatus according to (10), in which
   the control unit
   calculates the evaluation value after performing weighting depending on the reliability of the plurality of evaluators on the evaluation information by the plurality of evaluators.
(12) The information processing apparatus according to (11), in which
   the control unit
   compares the calculated evaluation value with the evaluation information of the evaluation target person,
   updates the reliability of the evaluator depending on a degree of approximation of the evaluation information to the evaluation value, and
   calculates the evaluation value again after performing weighting depending on the updated reliability on the evaluation information by the plurality of evaluators.
(13) The information processing apparatus according to (10), in which
   the control unit
   calculates the evaluation value of the evaluation target person on the basis of the evaluation information for the evaluation target person by the evaluator and an evaluation value of an analysis result of evaluation information obtained by evaluating the evaluator by another evaluator.
(14) The information processing apparatus according to (10), in which
   the control unit
   calculates, in a case where the evaluation information by the plurality of evaluators is a relative evaluation comparing a plurality of persons, the evaluation value of the evaluation target person after sorting a plurality of the evaluation target persons on the basis of all relative evaluations by the plurality of evaluators to convert the relative evaluation into an absolute evaluation.
(15) The information processing apparatus according to any one of (10) to (14), in which
   the control unit
   calculates a first evaluation value of the evaluation target person after performing weighting depending on the reliability of the plurality of evaluators on the evaluation information by the plurality of evaluators,
   calculates a second evaluation value of the evaluation target person on the basis of the evaluation information for the evaluation target person by the evaluator and an evaluation value of an analysis result of evaluation information obtained by evaluating the evaluator by another evaluator,
   calculates, in a case where the evaluation information by the plurality of evaluators is a relative evaluation comparing a plurality of persons, a third evaluation value of the evaluation target person after sorting a plurality of the evaluation target persons on the basis of all relative evaluations by the plurality of evaluators to convert the relative evaluation into an absolute evaluation, and
   calculates a final evaluation value of the evaluation target person on the basis of the first evaluation value, the second evaluation value, and the third evaluation value.
(16) The information processing apparatus according to any one of (1) to (15), in which
   the control unit performs control to
   acquire the evaluation information from at least one of input contents of an evaluation input screen input by the evaluator, a text analysis result of a message input by the evaluator, or an analysis result of a voice uttered by the evaluator, and accumulate the evaluation information in a storage unit.
(17) The information processing apparatus according to any one of (1) to (16), in which
   the control unit performs control to
   acquire, by using machine-learned information generated on the basis of accumulated sensing data of a plurality of evaluation target persons and an evaluation value of an analysis result of each piece of evaluation information of the plurality of evaluation target persons, the evaluation information from sensing data of the evaluation target person newly acquired, and
   accumulate the acquired evaluation information in a storage unit.
(18) The information processing apparatus according to any one of (1) to (17), in which
   the control unit performs control to
   present, to the evaluation target person, an evaluation value of an analysis result of the evaluation information of the evaluation target person and information indicating a factor of a change in a case where the evaluation value changes in a time series.
(19) An information processing method,
   by a processor, including:
   acquiring evaluation information for an evaluation target person by an evaluator and sensing data of the evaluation target person; and
   estimating reliability of evaluation by the evaluator on the basis of the evaluation information for the evaluation target person by the evaluator and the sensing data of the evaluation target person.
(20) A program for causing
   a computer to function as: a control unit configured to perform
   processing of acquiring evaluation information for an evaluation target person by an evaluator and sensing data of the evaluation target person, and
   processing of estimating reliability of evaluation by the evaluator on the basis of the evaluation information for the evaluation target person by the evaluator and the sensing data of the evaluation target person.

### REFERENCE SIGNS LIST

- 10: System
- 11, 12, 13: Information processing apparatus
- 100: Input unit
- 150, 250, 350: Interface
- 200, 200A, 200B, 200C, 200D: Processing unit
- 201: Evaluation unit
- 203: Evaluation information DB
- 205: Evaluation analysis unit
- 207: Reliability DB
- 208: Sensor information DB
- 209: Analysis result DB
- 211: Analysis result output unit
- 213: Automatic evaluation learning unit
- 215: Automatic evaluation machine DB
- 217: Automatic evaluation unit
- 219: Causal analysis unit
- 221: Evaluation time-series analysis unit
- 224: Automatic reliability estimation learning unit
- 226: Automatic reliability estimation machine DB
- 228: Automatic reliability estimation unit
- 300: Output unit

## Claims

1. An information processing apparatus comprising: a control unit configured to perform
processing of acquiring evaluation information for an evaluation target person by an evaluator and sensing data of the evaluation target person, and
processing of estimating reliability of evaluation by the evaluator on a basis of the evaluation information for the evaluation target person by the evaluator and the sensing data of the evaluation target person.

2. The information processing apparatus according to claim 1, wherein the control unit estimates the reliability depending on a degree of matching between results obtained by processing the evaluation information and the sensing data.

3. The information processing apparatus according to claim 1 or 2, wherein the control unit performs control to notify the evaluator of information indicating the reliability.

4. The information processing apparatus according to claim 3, wherein
the control unit performs control to
generate a screen including the information indicating the reliability, and
transmit the generated screen to the evaluator.

5. The information processing apparatus according to claim 1 or 2, wherein
the control unit performs control to
estimate the reliability for each of evaluation items,
generate an evaluation input screen in which the evaluation items are arranged depending on a degree of the reliability, and
transmit the generated evaluation input screen to the evaluator.

6. The information processing apparatus according to claim 1, wherein the control unit estimates the reliability on a basis of sensing data of the evaluator.

7. The information processing apparatus according to claim 6, wherein
the control unit
performs estimation processing of the reliability based on the sensing data of the evaluator using machine-learned information generated on a basis of accumulated sensing data of a plurality of evaluators and each degree of reliability of the plurality of evaluators.

8. The information processing apparatus according to claim 1, wherein
the control unit
compares the evaluation information of the evaluator with an evaluation value of an analysis result of accumulated evaluation information of a plurality of evaluators, and
estimates the reliability of the evaluator on a basis of a result obtained by the comparison.

9. The information processing apparatus according to claim 1, wherein
the control unit performs control to
compare a time-series change of an evaluation value of an analysis result of accumulated evaluation information of a plurality of evaluators with the evaluation information of the evaluator, and
feed a fact that the reliability of the evaluator is high back to the evaluator in a case where the evaluation value approximates the evaluation information by the evaluator.

10. The information processing apparatus according to claim 1, wherein
the control unit
analyzes accumulated evaluation information for the evaluation target person by a plurality of evaluators, and calculates an evaluation value of the evaluation target person.

11. The information processing apparatus according to claim 10, wherein
the control unit
calculates the evaluation value after performing weighting depending on the reliability of the plurality of evaluators on the evaluation information by the plurality of evaluators.

12. The information processing apparatus according to claim 11, wherein
the control unit
compares the calculated evaluation value with the evaluation information of the evaluation target person,
updates the reliability of the evaluator depending on a degree of approximation of the evaluation information to the evaluation value, and
calculates the evaluation value again after performing weighting depending on the updated reliability on the evaluation information by the plurality of evaluators.

13. The information processing apparatus according to claim 10, wherein
the control unit
calculates the evaluation value of the evaluation target person on a basis of the evaluation information for the evaluation target person by the evaluator and an evaluation value of an analysis result of evaluation information obtained by evaluating the evaluator by another evaluator.

14. The information processing apparatus according to claim 10, wherein
the control unit
calculates, in a case where the evaluation information by the plurality of evaluators is a relative evaluation comparing a plurality of persons, the evaluation value of the evaluation target person after sorting a plurality of the evaluation target persons on a basis of all relative evaluations by the plurality of evaluators to convert the relative evaluation into an absolute evaluation.

15. The information processing apparatus according to claim 10, wherein
the control unit
calculates a first evaluation value of the evaluation target person after performing weighting depending on the reliability of the plurality of evaluators on the evaluation information by the plurality of evaluators,
calculates a second evaluation value of the evaluation target person on a basis of the evaluation information for the evaluation target person by the evaluator and an evaluation value of an analysis result of evaluation information obtained by evaluating the evaluator by another evaluator,
calculates, in a case where the evaluation information by the plurality of evaluators is a relative evaluation comparing a plurality of persons, a third evaluation value of the evaluation target person after sorting a plurality of the evaluation target persons on a basis of all relative evaluations by the plurality of evaluators to convert the relative evaluation into an absolute evaluation, and
calculates a final evaluation value of the evaluation target person on a basis of the first evaluation value, the second evaluation value, and the third evaluation value.

16. The information processing apparatus according to claim 1, wherein
the control unit performs control to
acquire the evaluation information from at least one of input contents of an evaluation input screen input by the evaluator, a text analysis result of a message input by the evaluator, or an analysis result of a voice uttered by the evaluator, and accumulate the evaluation information in a storage unit.

17. The information processing apparatus according to claim 1, wherein
the control unit performs control to
acquire, by using machine-learned information generated on a basis of accumulated sensing data of a plurality of evaluation target persons and an evaluation value of an analysis result of each piece of evaluation information of the plurality of evaluation target persons, the evaluation information from sensing data of the evaluation target person newly acquired, and
accumulate the acquired evaluation information in a storage unit.

18. The information processing apparatus according to claim 1, wherein
the control unit performs control to
present, to the evaluation target person, an evaluation value of an analysis result of the evaluation information of the evaluation target person and information indicating a factor of a change in a case where the evaluation value changes in a time series.

19. An information processing method,
by a processor, comprising:
acquiring evaluation information for an evaluation target person by an evaluator and sensing data of the evaluation target person; and
estimating reliability of evaluation by the evaluator on a basis of the evaluation information for the evaluation target person by the evaluator and the sensing data of the evaluation target person.

20. A program for causing
a computer to function as: a control unit configured to perform
processing of acquiring evaluation information for an evaluation target person by an evaluator and sensing data of the evaluation target person, and
processing of estimating reliability of evaluation by the evaluator on a basis of the evaluation information for the evaluation target person by the evaluator and the sensing data of the evaluation target person.
